(19) Europäisches Patentamt / European Patent Office / Office européen des brevets

(11) **EP 4 074 489 B1**

(12) **EUROPEAN PATENT SPECIFICATION**

(45) Date of publication and mention
of the grant of the patent:
**09.07.2025 Bulletin 2025/28**

(21) Application number: **20898153.0**

(22) Date of filing: **08.12.2020**

(51) International Patent Classification (IPC):
**B29C 55/12** (2006.01)   **C08J 11/06** (2006.01)
**C08J 5/18** (2006.01)   **B29C 59/00** (2006.01)
**B29C 48/04** (2019.01)   **B29C 48/285** (2019.01)

(52) Cooperative Patent Classification (CPC):
**B29C 55/12;** B29C 48/0018; B29C 48/08;
B29C 48/21; B29C 48/277; B29C 48/288;
B29C 48/305; B29C 48/49; B29C 48/914;
B29C 48/92; C08J 5/18; Y02P 20/143; Y02W 30/62

(86) International application number:
**PCT/JP2020/045721**

(87) International publication number:
**WO 2021/117736 (17.06.2021 Gazette 2021/24)**

(54) **BIAXIALLY ORIENTED POLYESTER FILM AND PRODUCTION METHOD THEREFOR**

BIAXIAL GESTRECKTE POLYESTERFOLIE UND HERSTELLUNGSVERFAHREN DAFÜR

FILM DE POLYESTER À ORIENTATION BIAXIALE ET SON PROCÉDÉ DE FABRICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.12.2019 JP 2019225018
13.03.2020 JP 2020044267**

(43) Date of publication of application:
**19.10.2022 Bulletin 2022/42**

(73) Proprietor: **TOYOBO CO., LTD.
Osaka-shi, Osaka 530-0001 (JP)**

(72) Inventors:
• **MANABE, Nobuyuki
Inuyama-shi, Aichi 484-8508 (JP)**
• **HARUTA, Masayuki
Inuyama-shi, Aichi 484-8508 (JP)**

(74) Representative: **Vossius & Partner
Patentanwälte Rechtsanwälte mbB
Siebertstraße 3
81675 München (DE)**

(56) References cited:
WO-A1-2018/062145     WO-A1-2020/203106
JP-A- 2013 047 317     JP-A- 2013 155 385
JP-A- 2014 065 282     JP-A- 2014 080 594
JP-A- H01 144 425     US-B2- 7 939 160

**Description**

TECHNICAL FIELD

The present invention relates to a biaxially oriented polyester film and a production method therefor. Specifically, the present invention relates to a biaxially oriented polyester film, which is suitable for secondary processing such as coating and vapor deposition to further enhance the functions thereof, and is an environmentally friendly polyester film obtained using polyester resin recycled from the market and society, including PET bottles (hereinafter, referred to as "polyester resin recycled from PET bottles" in some cases) as well as has little variations in physical properties in the longitudinal direction when being wound into a long film roll having a long winding length as well, and a production method therefor.

BACKGROUND ART

Conventionally, biaxially oriented polyester films have been widely utilized in a wide range of fields such as packaging materials and industrial materials because of their excellent mechanical strength, thermal properties, optical properties, and the like (see for example JP H01 144425 A). Biaxially oriented polyester films exhibit excellent oxygen barrier properties, but there have been increasing demands for oxygen barrier properties and water vapor barrier properties related to denaturation and degradation of the contents and there is a problem that the contents are denatured and degraded in packaging applications for general food products, retort pouch food products, pharmaceuticals and the like.

Hence, measures are taken for biaxially oriented polyester films used in packaging applications for general food products, retort pouch food products, pharmaceuticals and the like to further improve the adhesive properties to printing ink and further improve the gas barrier properties such as oxygen barrier properties and water vapor barrier properties.

For example, as a method to improve gas barrier properties, there is a method in which a film formed of a resin exhibiting favorable gas barrier properties such as polyvinylidene chloride or polyethylene vinyl alcohol copolymer is pasted to a biaxially oriented polyester film, a method in which a thin film is laminated by applying a liquid in which these resins are dissolved, or a method in which a thin film is formed on the film surface by depositing a metal such as aluminum or a metal oxide such as aluminum oxide.

In particular, a vapor-deposited polyester film in which a metal oxide is provided on the film surface is excellent from the perspective of heat resistance and transparency in addition to gas barrier properties, and is thus often used.

However, it has not been easy to industrially stably obtain a vapor-deposited polyester film, which exhibits favorable gas barrier properties and has a metal oxide thin film such as a silicon oxide or aluminum oxide film provided on the film surface.

Hence, the gas barrier properties of a vapor-deposited polyester film is improved by controlling the surface state of the biaxially oriented polyester film used as the base material of the vapor-deposited polyester film. A biaxially oriented polyester film in which the surface roughness of the center plane and the number of protrusions are prescribed (see, for example, Patent Document 1) and a biaxially oriented polyester film in which the surface roughness of the center line is prescribed (see, for example, Patent Document 2) have been proposed.

Furthermore, a biaxially oriented polyester film in which the number of fine protrusions each having a specific height or more is controlled has been proposed (see, for example, Patent Document 3).

All of these films focus only on improving the gas barrier properties after a metal oxide thin film is provided, but it cannot be said that the improvement of wrinkles on the film roll and the adhesion between the films in the film roll, so-called blocking, when the film is wound into a film roll after production is sufficient. Moreover, the performance after secondary processing such as coating and vapor deposition has not also been sufficient.

In recent years, with the growing demand for the construction of a sound material-cycle society, the utilization of recycled raw materials has been promoted in the material field as well. In the polyester resins mentioned above as well, used beverage PET bottles are also recycled, and their utilization methods are attracting attention. It is said that the use of recycled PET bottles leads to $CO_2$ reduction, and there is a desire to increase the usage ratio of recycled PET bottle raw materials from the perspective of the global environment as well.

For example, Patent Document 4 discloses a biaxially oriented polyester film, which is a biaxially oriented polyethylene terephthalate film produced using a recycled PET bottle raw material and in which the melting resistivity at a temperature of 285°C is within $1.0 \times 10^8$ Ω·cm and the contents of sodium and potassium contained in the film are more than 0 ppm and 150 ppm or less, respectively.

According to such a technique, a biaxially oriented polyester film is obtained in which there are little residues of cleaning liquid components used when preparing recycled PET bottle raw materials, the thermal stability is excellent, there are few foreign substances, the resistivity at the time of melting is stable, and the productivity and quality of the film are not impaired.

However, a vapor-deposited polyester film, which exhibits favorable gas barrier properties and has a metal oxide thin film such as a silicon oxide or aluminum oxide film provided on the film surface is not mentioned, and silica particles having an average particle size of 2.5 $\mu$m are used in order to improve easy slipperiness, but the maximum height Sz is likely to increase, there is a problem that the coating film and the inorganic thin film layer after the secondary processing are missing or defective on the surface of the biaxially oriented polyester film, and this has not been sufficiently considered. Environmentally friendly polyester films, which exhibit excellent transparency, are easily subjected to secondary processing such as coating and vapor deposition, exhibit excellent properties after secondary processing, and are produced using polyester resins recycled from the market and society, including PET bottles, have not yet been realized.

As a means to obtain environmentally friendly polyester films, which exhibit excellent transparency, are easily subjected to secondary processing such as coating and vapor deposition, exhibit excellent properties after secondary processing, and are produced using polyester resins recycled from the market and society, including PET bottles, as described above, it can be expected to obtain the environmentally friendly polyester films by biaxially stretching polyester resin compositions in which polyester resin containing particles are blended with polyester resins recycled from the market and society, including PET bottles, and it is common to mix resin chips having normal specific gravity and resin chips, which contain particles and have a large specific gravity, to form a film. However, since the difference in specific gravity between the resin chips containing particles and the normal resin chips is large, the raw material ratio is likely to vary in the mixing and extrusion steps because of the segregation of these raw material resin chips, and the difference in physical properties in the longitudinal direction of the film is caused. As a result, there are cases where a product having uniform physical properties in the longitudinal direction of a long product roll is not obtained.

PRIOR ART DOCUMENT

PATENT DOCUMENTS

Patent Document 1: JP-A-10-119172
Patent Document 2: JP-A-11-010725
Patent Document 3: JP-B-4834923
Patent Document 4: JP-A-2014-65282

DISCLOSURE OF THE INVENTION

PROBLEMS TO BE SOLVED BY THE INVENTION

An object of the present invention is to improve the problems of the prior art and to provide an environmentally friendly polyester film, which exhibits excellent transparency, is easily subjected to secondary processing such as coating and vapor deposition, exhibits excellent properties after secondary processing, and is produced using a polyester resin recycled from the market and society, including PET bottles, and a production method therefor. More suitably, an object of the present invention is to provide a biaxially oriented polyester film in which the usage ratio of recycled PET bottle raw materials is further increased and a production method therefor. Still more suitably, an object of the present invention is to provide a biaxially oriented polyester film containing few foreign substances and a production method therefor. Particularly suitably, an object of the present invention is to provide a biaxially oriented polyester film roll having little variations in physical properties in the longitudinal direction when being a long film roll having a long winding length as well, and a production method therefor.

MEANS FOR SOLVING THE PROBLEMS

The present inventors have investigated the causes, which decrease the properties after secondary processing, as a result, found out that since a biaxially oriented polyester film has electrical insulation, static marks, which are locally charged parts, and static mark discharge marks due to the discharge of stored static electricity and the like are likely to be generated by contact with the transport roll, peeling off and the like in the film producing process and secondary processing process, and it is difficult for coated dissolved resin and vapor-deposited inorganic oxide molecules to form a thin film regularly and uniformly on the film surface without defects at this part.

As a result of diligent studies, the present inventors have found out that in a biaxially oriented polyester film obtained by biaxially stretching a polyester resin composition in which a polyester resin containing particles is blended with a polyester resin recycled from the market and society, including PET bottles, it is possible to obtain a uniform film having little variations in physical properties in the longitudinal direction of the film by setting the angle of repose of the polyester resin pellets containing particles to a specific range and by supplying the polyester resin chips recycled from the market and society, including PET bottles to the hopper from above as well as supplying the polyester resin chips containing particles through a pipe (hereinafter, referred to as an inner pipe in some cases) having an outlet in the hopper and directly above the extruder when mixing the resin chips that are the raw materials, mixing both chips, and melting and extruding the mixture. In addition, the present inventors have found out that there are little residues of cleaning liquid components used particularly when alkaline cleaning is performed to remove foreign substances when preparing recycled raw materials from the market and society, including PET bottles to be used in the present invention, and there are few foreign substances as well as the adhesive properties between the polyester film and the sealant is improved by using polyester resin recycled from the market and society, including PET bottles. Furthermore, the present inventors have found out that it is possible to suppress the generation of locally strongly charged parts called static marks and discharge marks described above and improve the performance after secondary processing, for example, gas barrier properties by setting the number of fine protrusions each having a specific height or less on the film surface on the side where the coating film or the vapor-deposited film is formed to a specific number or more, and it is possible to improve the slipperiness between films by setting the number of fine protrusions each having a specific height or more and the shape of protrusions to specific ranges, and thus completed the present invention.

EFFECT OF THE INVENTION

According to the present invention, it is possible to provide an environmentally friendly polyester film, which exhibits excellent transparency, is easily subjected to secondary processing such as coating and vapor deposition, exhibits excellent properties after secondary processing, and is produced using a polyester resin recycled from the market and society, including PET bottles, more suitably a biaxially oriented polyester film in which the usage ratio of recycled PET bottle raw materials is further increased, still more suitably a biaxially oriented polyester film containing few foreign substances, particularly suitably a biaxially oriented polyester film roll having little variations in physical properties in the longitudinal direction when being a long film roll having a long winding length as well, and a production method therefor.

Particularly in recent years, in order to increase the production efficiency of biaxially oriented polyester films, it is promoted to increase the length in the width direction and the length in the longitudinal direction of the biaxially oriented polyester film roll (hereinafter referred to as master roll), which is first wound after the stretching step, but it is possible to obtain a biaxially oriented polyester film, which causes less wrinkling and blocking when being wound into such a film roll having a large size, is easily subjected to secondary processing, and also satisfies the performance after secondary processing, for example, the gas barrier properties of the vapor-deposited film.

The same applies to the film roll obtained by slitting and dividing the master roll into small portions.

BRIEF DESCRIPTION OF THE DRAWINGS

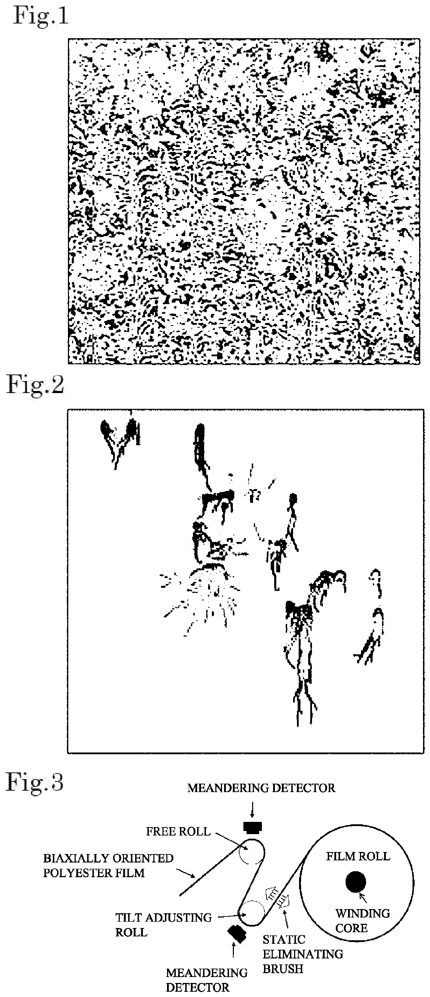

Fig. 1 is a photograph of a film surface in a state in which a strongly charged place on a surface of a film unwound from a film roll is visualized by a charge distribution determining toner, in which static marks are observed.

Fig. 2 is a photograph of a film surface in a state in which a place having discharge marks on a surface of a film unwound from a film roll is visualized by a charge distribution determining toner, in which static mark discharge marks are observed.

Fig. 3 is a diagram illustrating the disposition of a biaxially oriented polyester film being unwound, a film roll, a static eliminating brush, and a meandering preventing apparatus.

Fig. 4 is a schematic diagram for explaining an example of a method for mixing resin chips for producing a biaxially oriented polyester film of the present invention.

Fig. 5 is a partially enlarged view of Fig. 4.

MODE FOR CARRYING OUT THE INVENTION

Hereinafter, the present invention will be described in detail.

[polyester resin recycled from PET bottles]

In the biaxially oriented polyester film in the present invention, it is preferable to use the following polyester resin recycled from the market and society, including PET bottles. By using a polyester resin recycled from the market and society, including PET bottles, it is possible to increase the ratio of recycled raw materials in the film and obtain an environmentally friendly film.

The polyester resin recycled from the market and society, including PET bottles, which is used in the biaxially oriented polyester film of the present invention, is mainly composed of a recycled product of a container mainly composed of polyethylene terephthalate. For example, recycled products of containers for beverages such as tea beverages and soft drinks can be preferably used, and these may be appropriately oriented, and are preferably colorless, but may contain some colored components.

The recycled raw material recycled from the market and society, including PET bottles, which can be preferably utilized, is polyester that is produced and molded by a normal polymerization method and a solid phase polymerization method, is preferably composed mainly of polyethylene terephthalate, and may contain other polyester components and copolymerization components. A metal compound such as antimony, germanium, or titanium may be contained as a catalyst, and a phosphorus compound as a stabilizer may be contained. Germanium is often used as a catalyst in polyester for PET bottles, and the film contains germanium at 1 ppm or more when the film is formed of a raw material recycled from PET bottles. However, the content of germanium is the content of the catalyst to the last, and is thus usually 100 ppm or less at most, and is usually 50 ppm or less.

The collected used recyclable PET bottles are sorted so as not to be mixed with other materials and garbage, labels and the like are removed from the PET bottles, and then the PET bottles are crushed into flakes. Foreign substances are often attached to or mixed in these flakes. A case is also conceivable where consumers have filled chemical substances such as chemicals and solvents in the used PET bottles for use. For example, detergents for tableware and the like, pesticides, herbicides, pesticides and various kinds of oils are conceivable. It is preferable to perform alkaline cleaning since the chemical substances adsorbed on the surface of PET bottles cannot be sufficiently removed by normal cleaning. As the solution of the alkali metal hydroxide used in this cleaning step, a sodium hydroxide solution or a potassium hydroxide solution is used. In such a cleaning step, pre-cleaning may be performed before alkaline cleaning.

When alkaline cleaning is not performed, the chemical substances remain in the raw material resin as a foreign substance, thus these are mixed in and cause breakage during film formation, and this decreases the productivity, as well as the chemical substances remain in the film as a foreign substance and may cause the appearance of the film and printing omissions in the printing step performed later.

The concentration of the aqueous solution of an alkali metal hydroxide used in the cleaning step depends on the temperature, time, and stirring state but is usually in a range of 1 to 10% by weight. The time required for cleaning is in a range of 10 to 100 minutes, and it is preferable to perform the cleaning while performing stirring in order to enhance the effect.

It is preferable to perform rinsing and drying subsequently to the alkaline cleaning. Alkaline cleaning and rinsing may be repeatedly performed several times. When the aqueous solution components of an alkali metal hydroxide used for cleaning in the alkaline cleaning step remains in the flakes, these components may affect the physical properties of the film finally obtained through the melt extrusion step in the subsequent pellet granulation step and the melt extrusion step at the time of film formation.

The concentration of sodium and potassium in the film finally obtained by using the polyester resin recycled from the market and society, including these PET bottles is preferably more than 0 ppm and 150 ppm or less, more preferably 3 to 120 ppm, still more preferably 5 to 80 ppm. It is not preferable that the concentration of sodium or potassium contained in the film is higher than 150 ppm since the heat resistance and thermal stability of the film decrease or the film is colored. It is not preferable that sodium or potassium is not contained at all since the effect of suppressing the production of diethylene glycol is diminished. There is a case where slight amounts of these components are contained in the polyester resin recycled from the market and society, including PET bottles, and it is difficult to completely remove these components.

In such a cleaning step, a part of the PET bottle flakes is hydrolyzed by the aqueous solution of an alkali metal hydroxide. The degree of polymerization of the resin decreases by heating performed when PET bottles are molded. Furthermore, the degree of polymerization decreases by the influence of heat and water added when the recovered PET bottles are crushed for reuse, then melted again, and pelletized. The resin can be reused as it is, but cannot be reused as it is in some cases since the moldability, strength, transparency, heat resistance and the like are inferior depending on the used application when the degree of polymerization is decreased.

In such a case, in order to restore the decreased degree of polymerization, it is preferable to conduct solid phase polymerization of the flakes of PET bottles, which have been crushed and cleaned, or flakes, which have been melted and pelletized.

The solid phase polymerization step can be carried out by performing continuous solid phase polymerization of washed flakes or flakes, which have been melt-extruded and pelletized, in an inert gas such as nitrogen gas or noble gas at 180 to 245°C, preferably 200 to 240°C.

It is desirable to conduct the solid phase polymerization by adjusting the conditions of the flakes or pellets so that the limiting viscosity of the polyester resin recycled from the market and society, including PET bottles is finally 0.55 to 0.90 dl/g, preferably 0.60 to 0.85 dl/g.

The step of pelletizing the flakes will be described. The flakes are melted, extruded, cooled and granulated using an extruder equipped with degassing and filtering means.

The melting step in the extruder can be carried out by performing melting and kneading at 260 to 300°C, preferably 265 to 295°C. The crushed flakes of PET bottles to be put are required to be sufficiently dried, it is preferable to perform drying at 5 to 200, preferably 10 to 100 ppm, more preferably 15 to 50 ppm. When the amount of water contained in the flakes is large, the hydrolysis reaction proceeds in the melting step, and the limiting viscosity of the obtained polyester resin decreases. As the degassing means, those having at least one vacuum vent in the melting zone of the resin are preferable.

The extruder preferably has a filter capable of filtering and removing solid foreign substances having a particle size of 25 $\mu$m or more, preferably 15 $\mu$m or more, more preferably 10 $\mu$m or more in the molten resin as a filtering means.

The molten resin that has passed through the filter passes through a die, is cooled in water, and then is cut into pellets having a desired shape, and granulated.

[Polyester resin composition]

The biaxially oriented polyester film in the present invention is formed of a polyester resin composition containing the following polyester resin as a main component.

The polyester resin constituting the biaxially oriented polyester film of the present invention is a polymer synthesized from a dicarboxylic acid or an ester-forming derivative thereof and a diol or an ester-forming derivative thereof. Examples thereof include polyethylene terephthalate, polybutylene terephthalate, and polyethylene-2,6-naphthalate, and polyethylene terephthalate is preferable from the viewpoint of mechanical properties, heat resistance, cost and the like.

The main component here means one of which the content rate in the polyester resin composition is 80% by weight or more, and the content rate is preferably 90% by weight or more, more preferably 95% by weight or more, most preferably 98% by weight or more.

Other components may be copolymerized with these polyester resins as long as the object of the present invention is not impaired. Specifically, as the copolymerization components, examples of the dicarboxylic acid component include isophthalic acid, naphthalenedicarboxylic acid, 4,4-biphenyldicarboxylic acid, adipic acid, sebacic acid, and any ester-forming derivative thereof. Examples of the diol component include diethylene glycol, hexamethylene glycol, neopentyl glycol, and cyclohexanedimethanol. Examples of the diol component also include polyoxyalkylene glycols such as polyethylene glycol and polypropylene glycol. The amount of copolymerization is preferably 10 mol% or less, more preferably 5 mol% or less, most preferably 3 mol% or less per constituent repeating unit.

Examples of the method for producing the polyester resin constituting the biaxially oriented polyester film of the present invention include a method in which an esterification or transesterification reaction is first conducted according to a conventional method using the above-mentioned dicarboxylic acid or an ester-forming derivative thereof and the above-mentioned diol or an ester-forming derivative thereof as main starting materials and then a polycondensation reaction is conducted at a high temperature and a reduced pressure.

The limiting viscosity of the polyester resin constituting the biaxially oriented polyester film of the present invention is preferably in a range of 0.50 to 0.9 dl/g, more preferably in a range of 0.55 to 0.8 dl/g from the viewpoint of film formability and recycling properties.

In order to ensure that at least one surface of the biaxially oriented polyester film of the present invention meets all of the following requirements (1) to (3), it is preferable that the polyester resin composition in the present invention contains at least one kind of particles selected from the group consisting of inorganic particles, organic particles, and particles composed of a mixture thereof:

(1) the number of fine protrusions each having a height of less than 3 nm per area of $4 \times 10^{-12}$ m$^2$ is 250 or more;
(2) the number of fine protrusions each having a height of 3 nm or more per area of $4 \times 10^{-12}$ m$^2$ is 300 or more and 600 or less; and
(3) the arithmetic mean height Sa is 0.010 $\mu$m or more and 0.025 $\mu$m or less.

Examples of the inorganic particles used include particles formed of silica (silicon oxide), alumina (aluminum oxide), titanium dioxide, calcium carbonate, kaolin, and barium sulfate.

Examples of the organic particles include acrylic resin particles, melamine resin particles, silicone resin particles, and particles formed of crosslinked polystyrene. Among these, particles formed of silica (silicon oxide), calcium carbonate, or alumina (aluminum oxide), or particles formed of polymethacrylate, polymethylacrylate, or derivatives thereof are preferable, and particles formed of silica (silicon oxide) or calcium carbonate are more preferable, and inorganic particles formed of silica (silicon oxide) are particularly preferable.

The particle size distribution of the particles used in the present invention is preferably monodisperse.

The shape of the inorganic fine particles is not particularly limited, but as the shape is closer to a sphere, the number of fine protrusions each having a height of less than 3 nm can be increased without changing the number of fine protrusions each having a height of 3 nm or more and the arithmetic mean height Sa so much.

The weight average particle size of the particles in the present invention measured using a Coulter counter is preferably in a range of 0.8 to 1.8 $\mu$m.

When the weight average particle size of the particles is 0.8 $\mu$m or more, the number of fine protrusions each having a height of less than 3 nm and the arithmetic mean height Sa are likely to be set to the lower limit values of (1) and (3) or more, respectively.

When the weight average particle size of the particles is 1.8 $\mu$m or less, it is easy to set the arithmetic mean height Sa to the upper limit of (3) or less and this is also suitable for setting the number of fine protrusions each having a height of less than 3 nm to the lower limit of (1) or more.

The lower limit of the content of particles in the polyester resin composition (masterbatch) containing particles in the present invention is 1,000 ppm by weight, more preferably 1300 ppm by weight, particularly preferably 1400 ppm by mass. When the particle content is 1,000 ppm by weight or more, it is easy to set the number of fine protrusions each having a height of less than 3 nm and the number of fine protrusions each having a height of 3 nm or more to the lower limits of (1) and (2) or more, respectively.

The upper limit of the content of particles is preferably 3,000 ppm by weight, more preferably 2,500 ppm by weight, still more preferably 2,200 ppm by weight, particularly preferably 1,800 ppm by weight.

The concentration of the inorganic particles in the masterbatch is preferably 7,000 to 400,000 ppm, more preferably 8,000 to 350,000 ppm, particularly preferably 9,000 to 300,000 ppm. When the concentration of the inorganic particles in the masterbatch is less than 7,000ppm, the addition ratio of the masterbatch containing the inorganic particles becomes large, the proportion of polyester resin recycled from the market and society, including PET bottles, which are the main raw material, decreases, and inexpensive resin and resin properties for environmental consideration and the like are not effectively obtained. When the concentration of the inorganic particles in the masterbatch is greater than 400,000 ppm, the raw material ratio greatly fluctuates in the longitudinal direction because of segregation of the raw materials, and thus the variation in the longitudinal direction of the obtained film is likely to be large.

The angle of repose of the master pellet (masterbatch) is preferably 25 to 40 degrees, more preferably 30 to 40 degrees. When the angle of repose is larger than 40 degrees, segregation is likely to occur before being supplied to the extruder after being mixed with the polyester resin recycled from the market and society, including PET bottles, and the variation in the longitudinal direction of the obtained film is likely to be large. The angle of repose of the master pellet can be adjusted by changing the shape and size of the pellet. The angle of repose is smaller as the pellet is closer to a sphere, and the angle of repose is larger as the pellet is longer. The angle of repose is smaller as the pellet size is smaller.

As the method for blending the particles into the polyester resin composition in the present invention, for example, the particles can be added at any stage of the stage of esterification for production of polyester-based resin, the stage after the termination of transesterification reaction, or the stage before the start of polycondensation reaction, but it is preferable to add the particles as a slurry dispersed in ethylene glycol or the like and to conduct the polycondensation reaction.

It is also preferable to blend the particles by a method in which a slurry of particles dispersed in ethylene glycol, water or the like is blended with a polyester-based resin raw material using a kneading extruder with a vent or a method in which the dried particles are blended with a polyester-based resin raw material using a kneading extruder.

In the step of mixing the particles with the polyester-based resin raw material, it is preferable to decrease the aggregates of particles as much as possible in order to stably obtain the desired surface state, but the influence can be diminished by adjusting the conditions in the step of forming the biaxially oriented polyester film after the mixing step.

The polyester resin composition in the present invention may contain a small amount of other polymers, antioxidants, heat stabilizers, anti-static agents, ultraviolet absorbers, plasticizers, pigments or other additives and the like as long as the object of the present invention is not impaired.

The polyester film obtained as described above preferably contains an isophthalic acid component in a content rate range of 0.02 mol% or more and 2.0 mol% or less with respect to 100 mol% of the total dicarboxylic acid components in the biaxially oriented polyester film. Polyester, which is generally used for PET bottles, is subjected to crystallinity control in order to improve the appearance of bottles, and as a result, polyester containing an isophthalic acid component at 10 mol% or less is used in some cases.

Therefore, the polyester film of the present invention contains a certain amount of a material containing an isophthalic acid component. In the present invention, it is possible to further improve the adhesive strength when the film is bonded to a sealant by containing a specific amount of isophthalic acid component in the film.

The reason why the adhesive property to a sealant is improved by containing an isophthalic acid component in the film is not clear, but it is presumed that this is because the isophthalic acid-ethylene glycol unit is less likely to crystallize than a terephthalic acid-ethylene glycol unit, thus a large amount of amorphous components remain in the film, as a result, not only the film is easily modified by the surface treatment such as corona treatment, but also the very surface of the film is easily dissolved in the solvent, and the affinity of the film for the adhesive used to bond the sealant is enhanced.

The lower limit of the amount of the isophthalic acid component in the total dicarboxylic acid components constituting the polyester resin contained in the film is preferably 0.02 mol%, more preferably 0.05 mol%, still more preferably 0.1 mol%, particularly preferably 0.15 mol%. As mentioned earlier, some polyester resins recycled from the market and society, including PET bottles, contain a large amount of isophthalic acid, and thus it is less preferable that the isophthalic acid component constituting the polyester resin in the film is less than 0.02 mol% since it is difficult to produce a polyester film having a high ratio of recycled resin as a result. The upper limit of the amount of the isophthalic acid component in the total dicarboxylic acid components constituting the polyester resin contained in the film is preferably 2 mol%, more preferably 1.5 mol%, still more preferably 1.0 mol%. It is not so preferable that the amount exceeds 2.0 mol% since the crystallinity decreases and the mechanical strength as a film decreases in some cases. It is preferable to set the content rate of the isophthalic acid component to be in the above range since it is easy to fabricate a film having excellent laminating strength, shrinkage rate, and even thickness.

The upper limit of the limiting viscosity of the polyester resin recycled from the market and society, including PET bottles is preferably 0.9 dl/g, more preferably 0.8 dl/g, still more preferably 0.75 dl/g, particularly preferably 0.69 dl/g. It is not so preferable that the limiting viscosity exceeds 0.9 dl/g since it is difficult to discharge the resin from the extruder and the productivity decreases in some cases.

In the polyester film of the present invention, the lower limit of the content rate of the polyester resin recycled from the market and society, including PET bottles with respect to the total amount is preferably 50% by weight, more preferably 70% by weight, still more preferably 90% by mass, particularly preferably 100% by weight. When the content rate is less than 50% by weight, the content rate is poor in terms of utilization of recycled resin and it is not so preferable in terms of contribution to environmental protection. Here, the fact that the content rate of the recycled polyester resin is 100% by mass includes a case where particles are contained at 0.5% by mass or less (namely, a case where the content rate of the recycled polyester resin is 99.5% by mass or more). Polyester resins recycled from the market and society, including PET bottles, can also be used as a masterbatch (high concentration resin) used when lubricants such as inorganic particles and additives are added to improve the functions as a film.

[Production method for biaxially oriented polyester film]

The biaxially oriented polyester film of the present invention can be obtained by, for example, supplying and mixing the polyester resin chips recycled from the market and society, including PET bottles and chips of a polyester resin composition containing a polyester resin as a main component in an extruder equipped in a hopper, and then melt-extruding the mixture using the extruder to form an un-stretched sheet, and stretching the un-stretched sheet.

Suitable examples are described below, but the production method is not limited thereto.

The film of the present invention may have a single-layer structure having at least one layer, or may have a laminated structure having two or more layers. The film of the present invention may have two layers, three layers, four layers, or five layers. In the case of two layers, the film is composed of laminated portion/base layer portion, and in the case of three layers, the film is composed of a laminated portion (A)/base layer portion/laminated portion (B). In the case of three layers, the laminated portion (A) and the laminated portion (B) may have the same composition and configuration or may have different compositions and, for example, a configuration of a particle-free layer/base layer portion/particle-containing layer. The laminated portion (A) and the laminated portion (B) may have substantially the same thickness or different thicknesses. Preferably, it is desirable that the laminated portion (A) and the laminated portion (B) are designed to have the same composition for easy production.

Next, in the film of the present invention, it is preferable that at least one layer of each of the above-mentioned layers constituting the film is biaxially oriented. Among the laminated structures having two or more layers, it is particularly preferable that all the layers are biaxially oriented. It is not so preferable that all layers are non-oriented or uniaxially oriented since it is difficult to use the film for body-wrapping labels.

When the resin chips, which are raw materials, are mixed, it is preferable that the polyester resin chips recycled from the market and society, including PET bottles are supplied to the hopper from above as well as the chips of the polyester resin composition are supplied through the pipe having an outlet in the hopper and directly above the extruder (hereinafter, referred to as an inner pipe in some cases), both chips are mixed, and the mixture is melt-extruded. When the polyester resin chips recycled from the market and society, including PET bottles and the chips of the polyester resin composition are supplied to the hopper above the extruder in a mixed state, there is a possibility that the resin chips having different specific gravity and chip shapes cause segregation of raw materials in the hopper. In particular, there is a high concern that raw material segregation occurs at the place (the part that is slanted) where the inner wall of the hopper is not vertical. However, when the polyester resin composition is directly supplied to the directly upper part of the extruder in the hopper through the inner pipe, the raw material segregation can be diminished and the polyester film can be stably industrially produced although the resin chips have different specific gravity and chip shapes.

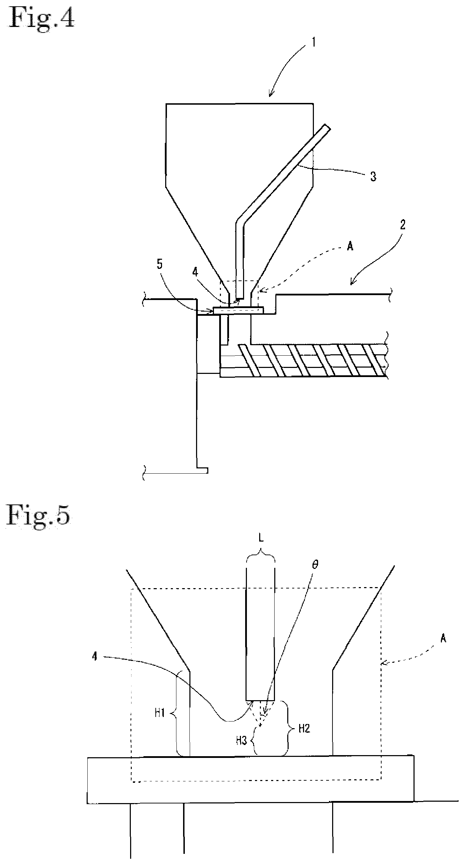

An example of a specific mixing procedure is illustrated in Fig. 4. Fig. 4 is a schematic diagram illustrating an example of the relation between an extruder 2 equipped with a hopper 1 and an inner pipe 3. As illustrated in Fig. 4, resins other than the polyester resin chips recycled from the market and society, including PET bottles, which are the main raw material of the polyester film of the present invention, are supplied through the inner pipe 3 and the chips of the polyester resin composition are supplied from the upper part of the hopper 1. Since an outlet 4 of the inner pipe 3 is directly above the extruder (to be exact, directly above a resin supply port 5 of the extruder 2), the mixing ratio of the raw materials can be kept constant.

When the polyester resin recycled from the market and society, including PET bottles and the polyester resin composition are melt-extruded, it is preferable to dry the polyester resin and the polyester resin composition using a dryer such as a hopper dryer or a paddle dryer or a vacuum dryer. The polyester resin recycled from the market and society, including PET bottles and the polyester resin composition are dried in this way, and then melted at a temperature that is the melting point of the polyester resin or more and is 200 to 300°C and extruded into a film using the extruder. Alternatively, the polyester resin, particles, and if necessary, additives may be sent through separate extruders, merged, then mixed and melted, and extruded into a sheet.

When the molten resin composition is extruded, an arbitrary existing method such as a T-die method and a tubular method can be adopted.

Thereafter, an un-stretched sheet can be obtained by rapidly cooling the sheet-shaped molten polyester resin after extrusion. As the method for rapidly cooling the molten polyester resin, a method in which a substantially un-oriented resin sheet is obtained by casting the molten polyester resin onto a rotating drum through a mouthpiece and rapidly cooling and solidifying the cast polyester resin can be suitably adopted. The temperature of the rotating drum is preferably set to 40°C or less.

Furthermore, the obtained un-stretched sheet is subjected to the combination of the following steps such as a stretching step in the longitudinal direction and the width direction, a heat setting step, and a heat relaxation step, whereby it is possible to obtain the biaxially oriented polyester film of the present invention.

This will be described in detail below. The longitudinal direction means the direction in which the un-stretched sheet travels, and the width direction means the direction perpendicular to the longitudinal direction.

The stretching method can be simultaneous biaxial stretching in which stretching in the longitudinal direction and stretching in the width direction are performed at the same time or sequential biaxial stretching in which stretching in either of the longitudinal direction or the width direction is first performed, but sequential biaxial stretching is most preferable from the viewpoint of high film forming speed and high productivity and the viewpoint of excellent thickness uniformity of the finally obtained biaxially oriented polyester film.

The film forming speed here means the traveling speed (m/min) of the biaxially oriented polyester film when wound into a master roll after the stretching step.

The temperature during stretching of the un-stretched sheet in the longitudinal direction is preferably in a range of (Tg + 15) to (Tg + 55)°C with the glass transition temperature (hereinafter, Tg) of the polyester resin as an index, and the draw ratio is in a range of 4.2 to 4.7 times.

It is preferable that the temperature during stretching is (Tg + 55)°C or less and the draw ratio is 4.2 times or more since it is easy to set the number of fine protrusions each having a height of less than 3 nm to the lower limit of (1) or more, the molecular orientations in the longitudinal direction and the width direction are well-balanced and the difference between the physical properties in the longitudinal direction and the physical properties in the width direction is small. This is preferable since the flatness of the obtained biaxially oriented polyester film is also favorable.

Meanwhile, when the temperature during stretching in the longitudinal direction is (Tg + 15)°C or more and the draw ratio is 4.7 times or less, it is easy to set the arithmetic mean height Sa to the upper limit of (3) or less. This is preferable since the tensile stress (bowing phenomenon) generated in the direction opposite to the traveling direction of the film in the heat relaxation step does not become too large.

In stretching in the longitudinal direction, the difference in physical properties in the film width direction can be further diminished in a method in which stretching is performed not in one stage but in two, three, or four or more stages between a plurality of rolls since the draw ratio in the longitudinal direction can be increased without increasing the stretching speed too much. Two-stage or three-stage stretching is preferable from the viewpoint of effect, equipment, and cost.

After the film obtained by stretching the un-stretched sheet in the longitudinal direction has been subjected to surface treatment such as corona treatment and plasma treatment if necessary, a resin dispersion or a resin solution can be applied to at least one surface of the film in order to impart functions such as easy slipperiness, easy adhesive property, and antistatic property.

When the film obtained by stretching the un-stretched sheet in the longitudinal direction is stretched in the width direction, the film can be stretched in the width direction by guiding the film to a tenter apparatus, holding both ends of the film obtained by stretching the un-stretched sheet in the longitudinal direction with clips, heating the film to a predetermined temperature with hot air, and then increasing the distance between the clips while transporting the film in the longitudinal direction.

It is preferable that the temperature during stretching in the width direction is (Tg + 5)°C or more since it is easy to set the arithmetic mean height Sa to the upper limit value of (3) and breakage is less likely to occur during stretching.

It is preferable that the temperature during stretching is (Tg + 40)°C or less since it is easy to set the number of fine protrusions each having a height of less than 3 nm to the lower limit of (1) or more, uniform stretching in the width direction is likely to be performed, thickness unevenness in the width direction is less likely to increase, and the variation in the winding hardness on the film roll surface in the width direction is less likely to be large.

The temperature during stretching is more preferably (Tg + 8)°C or more and (Tg + 37)°C or less, still more preferably (Tg + 11)°C or more and (Tg + 34)°C or less.

The draw ratio in the width direction of the film obtained by stretching the un-stretched sheet in the longitudinal direction is preferably 4.0 times or more and 6 times or less.

It is preferable that the draw ratio in the width direction is 4.0 times or more since it is easy to set the number of fine protrusions each having a height of less than 3 nm to the lower limit of (1) or more, it is easy to obtain a high yield in terms of mass balance, and the mechanical strength does not decrease as well as the thickness unevenness in the width direction is less likely to increase and the variation in the winding hardness of the film roll in the width direction is less likely to be caused. The draw ratio in the width direction is more preferably 4.1 times or more, still more preferably 4.2 times or more.

It is preferable that the draw ratio in the width direction is 6 times or less since it is easy to set the arithmetic mean height Sa to the upper limit value of (3) or less and breakage is less likely to occur during stretching and film formation.

A heat setting step is performed subsequently to the stretching step in the width direction, and the heat setting temperature of the film obtained by stretching the un-stretched sheet in the longitudinal direction and stretching the film in the width direction is preferably 240°C or more and 250°C or less.

It is preferable that the heat setting temperature is 240°C or more since it is easy to set the number of fine protrusions each having a height of less than 3 nm to the lower limit of (1) or more, the thermal shrinkage does not become too high in both the longitudinal direction and the width direction, and the thermal dimensional stability during the vapor deposition processing is improved.

Meanwhile, it is preferable that the heat setting temperature is 250°C or less since bowing is less likely to increase.

The heat relaxation treatment step is further performed, but the heat relaxation treatment step may be performed separately from the heat setting step after the heat setting step or may be performed at the same time as the heat setting step. The relaxation rate in the film width direction in the heat relaxation treatment step is preferably 4% or more and 8% or less.

It is preferable that the relaxation rate is 4% or more since the thermal shrinkage in the width direction of the obtained biaxially oriented polyester film does not increase too high and the dimensional stability during the vapor deposition processing is improved.

Meanwhile, it is preferable that the relaxation rate is 8% or less since the tensile stress (bowing phenomenon) caused in the direction opposite to the traveling direction of the film in the width direction center of the film does not increase too high and the coefficient of film thickness fluctuation in the width direction does not increase.

In the heat relaxation treatment step, the film is in a situation to be significantly likely to fluctuate up and down since the binding force in the width direction may decrease and the film may loosen by its own weight until the film obtained by stretching an un-stretched sheet in the longitudinal direction and stretching the film in the width direction is shrunk by heat relaxation and the film may swell by the accompanying airflow of hot air blown from the nozzles installed above and below the film, and the amounts of changes in the orientation angle and the difference in the oblique thermal shrinkage of the obtained biaxially stretched polyester film are likely to fluctuate greatly.

Examples of the method for diminishing these include keeping the film parallel by adjusting the wind speed of hot air blown from the upper and lower nozzles.

The biaxially oriented polyester film for vapor deposition of the present invention may be subjected to a corona discharge treatment, a glow discharge treatment, a flame treatment, and a surface roughening treatment and also subjected to known anchor coating treatment, printing, decoration, and the like as long as the object of the present invention is not impaired.

The wide biaxially oriented polyester film which has been stretched and formed by the methods described above is wound using a winder apparatus to fabricate a master roll. The width of the master roll is preferably 5,000 mm or more and 10,000 mm or less. It is preferable that the width of the roll is 5,000 mm or more since the cost per film area decreases in the subsequent slitting step, vapor deposition processing, and printing processing.

The winding length of the master roll is preferably 10,000 m or more and 100,000 mm or less. It is preferable that the winding length of the roll is 5,000 m or more since the cost per film area decreases in the subsequent slitting step, vapor deposition processing, and printing processing.

The winding width of the film roll slit from the master roll is preferably 400 mm or more and 3,000 mm or less. It is preferable that the winding width is 400 mm or more in terms of cost since the labor to frequently exchange the film roll in the printing step decreases. It is more preferable as the winding width is wider, but it is preferable that the winding width is 3,000 mm or less since the roll width does not increase too wide, the roll weight does not increase too heavy, and the handleability does not decrease.

The winding length of the film roll is preferably 2,000 m or more and 65,000 m or less. It is preferable that the winding length is 2,000 m or more in terms of cost since the labor to frequently exchange the film roll in the printing step decreases. It is more preferable as the winding length is longer, but it is preferable that the winding length is 65,000 m or less since the roll diameter does not increase too large, the roll weight does not increase too heavy, and the handleability does not decrease.

[Properties of biaxially oriented polyester film]

It is preferable that at least one surface of the biaxially oriented polyester film obtained using a polyester resin composition containing a polyester resin recycled from the market and society, including PET bottles and particles of the present invention meets all of the following requirements (1) to (3). Each will be described in detail.

(1) The number of fine protrusions each having a height of less than 3 nm per area of $4 \times 10^{-12}$ m$^2$ is 250 or more and 600 or less.
(2) The number of fine protrusions each having a height of 3 nm or more per area of $4 \times 10^{-12}$ m$^2$ is 300 or more and 600 or less.
(3) The arithmetic mean height Sa is 0.010 $\mu$m or more and 0.025 $\mu$m or less.

(1) Number of fine protrusions each having height of less than 3 nm per area of $4 \times 10^{-12}$ m$^2$

Sine a biaxially oriented polyester film has electrical insulation, static marks, which are locally charged parts, and static mark discharge marks due to the discharge of stored static electricity are likely to be generated by contact with the transport roll, peeling off and the like in the film producing process and processing process, but when the number of fine protrusions each having a height of less than 3 nm per area of $4 \times 10^{-12}$ m$^2$ is 250 or more, static marks and static mark discharge marks decrease, and coating unevenness is less likely to occur after the coating layer is formed, the gas barrier performance of the formed inorganic thin film layer is improved, or the performance after secondary processing is likely to be improved.

It is considered that the reason is because when the number of fine protrusions each having a height of less than 3 nm per area of $4 \times 10^{-12}$ m$^2$ is 250 or more, the area in which the film surface and the metal roll come into contact with each other is extremely small in a case where the film and the metal roll come into contact with each other with a strong force and the high protrusions on the film surface are pushed in the step of transporting and winding the produced film as well, the electric charge amount due to friction is small, and as a result, the static marks and the static mark discharge marks decrease. The number of fine protrusions is still more preferably 300 or more, more preferably 400 or more, particularly preferably 500 or more. This tendency also applies to the friction that occurs when the films come into contact with each other.

The number of fine protrusions each having a height of less than 3 nm does not further improve the slipperiness of the film or decrease the blocking property but has a feature that the number does not adversely affect the gas barrier properties of the inorganic thin film layer formed on the film surface.

When the number of fine protrusions each having a height of less than 3 nm is in a range of 600 or less as well, there are sufficiently few static marks and static mark discharge marks.

(2) Number of fine protrusions each having height of 3 nm or more per area of $4 \times 10^{-12}$ m$^2$

It is preferable that the number of fine protrusions each having a height of 3 nm or more is 300 or more since the dynamic friction coefficient between the films does not become too small, and static marks, which are locally charged parts, and static mark discharge marks due to the discharge of stored static electricity generated by contact with the transport roll, peeling off and the like in the film producing process or processing process since the biaxially oriented polyester film has electrical insulation can be less likely to be generated. The number of fine protrusions is still more preferably 400 or more, more preferably 500 or more.

When the number of fine protrusions each having a height of 3 nm or more is 600 or less, the gas barrier properties of the formed inorganic thin film layer can be sufficiently obtained.

(3) Arithmetic mean height Sa

The arithmetic mean height Sa of at least one surface of the biaxially oriented polyester film of the present invention is preferably 0.010 $\mu$m or more and 0.025 $\mu$m or less.

It is preferable that the arithmetic mean height Sa is 0.010 $\mu$m or more since adhesion (blocking phenomenon) between films in the film roll of the recess portion between the films and between the protrusions formed on the film surface is less likely to occur and the secondary processing of the film can be performed smoothly. The arithmetic mean height Sa is more preferably 0.013 μm or more, more preferably 0.015 μm or more.

It is preferable that the arithmetic mean height Sa is 0.025 μm or less since the haze of the biaxially oriented polyester film, particularly the external haze, decreases and the transparency is excellent. The arithmetic mean height Sa is still more preferably 0.023 μm or less, more preferably 0.020 μm or less, particularly preferably 0.017 μm or less.

The arithmetic mean height Sa of the other film surface is preferably in a similar range.

(Dynamic friction coefficient)

The dynamic friction coefficient between one surface of the biaxially oriented polyester film of the present invention and the opposite surface is preferably 0.20 or more and 0.60 or less.

When the dynamic friction coefficient is 0.20 or more, the films do not slip too much, the film roll is less likely to wrinkle when the film roll is wound using a winder apparatus during film production or slitting, and the secondary processability is less likely to decrease. The dynamic friction coefficient is still more preferably 0.30 or more, most preferably 0.45 or more.

When the dynamic friction coefficient is 0.60 or less, the films do not slip too much, the film roll is less likely to wrinkle when the film roll is wound using a winder apparatus during film production or slitting, and the secondary processability is less likely to decrease. The dynamic friction coefficient is still more preferably 0.50 or less, most preferably 0.44 or less.

(Static friction coefficient)

The static friction coefficient between one surface of the biaxially oriented polyester film of the present invention and the opposite surface is preferably 0.20 or more and 0.60 or less.

When the dynamic friction coefficient is 0.20 or more, the films do not slip too much, the film roll is less likely to wrinkle when the film roll is wound using a winder apparatus during film production or slitting, and the secondary processability is less likely to decrease. The dynamic friction coefficient is still more preferably 0.30 or more, most preferably 0.45 or more.

When the static friction coefficient is 0.60 or less, the films slip, thus the film roll is less likely to wrinkle when the film roll is wound using a winder apparatus during film production or slitting, and the secondary processability is less likely to decrease. The dynamic friction coefficient is still more preferably 0.50 or less, most preferably 0.44 or less.

(Maximum height Sz)

The maximum height Sz of the surface meeting all of (1) to (3) of the biaxially oriented polyester film of the present invention is preferably 0.5 μm or more and 2.0 μm or less.

When the maximum height Sz is 0.5 μm or more, the amount of air entrained between the films in contact with each other is less likely to increase when the master roll is wound or when the master roll is slit and the biaxially oriented polyester film is wound around the winding core, and the film is less stretched or deformed. The film in the roll is less likely to loosen after the air in the film roll is released. When the weight average particle size of the particles contained in the polyester resin is 0.8 μm or more, it is easy to set the maximum height Sz to 0.5 μm or more.

When the maximum height Sz is 2.0 μm or less, the coating film and the inorganic thin film layer after the secondary processing are less missing or defective on the surface of the biaxially oriented polyester film. When the temperature during stretching in the longitudinal direction is (Tg + 40)°C or less or the draw ratio is 4.2 times or more, it is easy to set the maximum height Sz to 2.0 μm or less.

The same applies to the maximum height Sz of the other film surface.

(External haze)

The external haze of the biaxially oriented polyester film of the present invention is preferably 1.8% or less. It is preferable that the external haze is 1.8% or less since the smoothness of the film surface is less likely to be impaired, charging due to contact with the transport roll, peeling off and the like is less likely to occur in the film producing process, and quality defects such as static marks and static mark discharge marks due to charging are less likely to be generated. The external haze is still more preferably 1.6% or less, more preferably 1.4% or less, particularly preferably 1.2% or less, most preferably 1.0% or less.

(Internal haze)

The internal haze of the biaxially oriented polyester film of the present invention is preferably 2.5% or less. It is preferable that the internal haze is 2.5% or less since the transparency is less likely to decrease. The internal haze is still more preferably 2.0% or less, more preferably 1.8% or less, particularly preferably 1.6% or less.

(Wetting tension)

One surface of the biaxially oriented polyester film of the present invention may be subjected to surface modification by a surface treatment such as low temperature plasma treatment or corona discharge treatment.
At this time, the wetting tension of the surface meeting all of (1) to (3) of the biaxially oriented polyester film of the present invention is preferably 50 mN/m or more, more preferably 52 mN/m or more.
There is no particular upper limit, but the wetting tension in a range of 55 mN/m or less is sufficient for the performance after secondary processing such as coating and vapor-deposited thin film.

(Film thickness)

The film thickness of the biaxially oriented polyester film of the present invention is preferably 5 to 40 $\mu$m. It is preferable that the film thickness is 5 $\mu$m or more since the strength and firmness as a film do not decrease and the film roll is less likely to wrinkle when the film is wound using a winder apparatus. Meanwhile, when the film thickness is in a range of 40 $\mu$m or less, the strength and firmness is sufficiently obtained, and it is preferable to decrease the film thickness from the viewpoint of cost. The film thickness is more preferably 8 to 30 $\mu$m, particularly preferably 9 $\mu$m to 20 $\mu$m.

(Number of defects)

In the biaxially oriented polyester film of the present invention, it is preferable that there is less than one foreign substance of 1 mm or more per 1 $m^2$ of the film from the viewpoint of film quality, and in this case, the film can be said to be a high-quality film while a recycled polyester raw material is used.

(Vapor-deposited film)

A gas barrier layer such as an inorganic thin film layer or a metal foil such as an aluminum foil can be provided on at least one surface meeting all of the following (1) to (3) of the biaxially oriented polyester film of the present invention:

(1) the number of fine protrusions each having a height of less than 3 nm per area of $4 \times 10^{-12}$ $m^2$ is 250 or more and 600 or less;
(2) the number of fine protrusions each having a height of 3 nm or more per area of $4 \times 10^{-12}$ $m^2$ is 300 or more and 600 or less; and
(3) the arithmetic mean height Sa is 0.010 $\mu$m or more and 0.025 $\mu$m or less.

The inorganic thin film layer is a thin film formed of a metal or an inorganic oxide. The material for forming the inorganic thin film layer is not particularly limited as long as the material can be formed into a thin film. From the viewpoint of gas barrier properties, preferable examples thereof include inorganic oxides such as silicon oxide (silica), aluminum oxide (alumina), and a mixture of silicon oxide and aluminum oxide. Particularly, a composite oxide of silicon oxide and aluminum oxide is preferable from the viewpoint of achieving both flexibility and denseness of the thin film layer and the viewpoint of transparency.
In the composite oxide of silicon oxide and aluminum oxide, with regard to the mixing ratio of silicon oxide to aluminum oxide, Al is preferably in a range of 20 to 70% in terms of the weight ratio of metal contents. When the Al concentration is less than 20%, the water vapor gas barrier properties may decrease. Meanwhile, when the Al concentration is more than 70%, the inorganic thin film layer tends to be hard, the film may be broken during secondary processing such as printing and lamination, and the barrier properties may decrease. The silicon oxide used herein is various silicon oxides such as SiO and $SiO_2$ or a mixture thereof, and the aluminum oxide used herein is various aluminum oxides such as AlO and $Al_2O_3$ or a mixture thereof.
The thickness of the inorganic thin film layer is usually 1 to 100 nm, preferably 5 to 50 nm. When the thickness of the inorganic thin film layer is less than 1 nm, it may be difficult to obtain satisfactory gas barrier properties. On the other hand, even when the thickness is excessively thicker than 100 nm, the effect of improving the gas barrier properties along with excessive thickness is not obtained, and it is rather disadvantageous from the viewpoint of flex resistance and production cost.
The method for forming the inorganic thin film layer is not particularly limited, and known vapor deposition methods, for example, physical vapor deposition methods (PVD methods) such as a vacuum vapor deposition method, a sputtering method, and an ion plating method, or chemical vapor deposition methods (CVD methods) may be appropriately adopted. Hereinafter, a typical method for forming the inorganic thin film layer will be described by taking a silicon oxide-aluminum oxide based thin film as an example. For example, in the case of adopting the vacuum vapor deposition method, a mixture of $SiO_2$ and $Al_2O_3$, a mixture of $SiO_2$ and Al, or the like is preferably used as a vapor deposition raw material. Usually, particles are used as these vapor deposition raw materials. In this case, the size of each particle is desirably a size that does not change the pressure during vapor deposition, and the preferable particle size is 1 mm to 5 mm. For heating, systems such as resistive heating, high frequency induction heating, electron beam heating, and laser heating can be adopted. It is also possible to adopt reactive vapor deposition by introducing oxygen, nitrogen, hydrogen, argon, carbon dioxide gas, water vapor or the like as a reaction gas or using a means such as ozone addition or ion assist. The film forming conditions can also be arbitrarily changed so that a bias is applied to the body to be vapor-deposited (laminated film to be subjected to vapor deposition) or the body to be vapor-deposited is heated or cooled. The vapor deposition materials, the reaction gases, the application of a bias to the body to be vapor-deposited, the heating/cooling, and the like can be similarly changed even when a sputtering method and a CVD method are adopted. A printing layer may be laminated on the inorganic thin film layer.

In the present invention, it is preferable to provide a protective layer on the gas barrier layer. The gas barrier layer formed of a metal oxide is not a completely dense film and has dotted microscopic deficient moieties. By applying a specific resin composition for protective layer to be described later onto the inorganic thin film layer to form a protective layer, a resin in the resin composition for protective layer invades the deficient moieties of the inorganic thin film layer, and as a result, an effect of stabilizing the gas barrier properties is obtained. Additionally, by using a material exhibiting gas barrier properties in the protective layer itself as well, the gas barrier performance of the laminated film can also be greatly improved.

Examples of the protective layer include protective layers obtained by adding curing agents such as epoxy-based curing agents, isocyanate-based curing agents, and melamine-based curing agents to resins such as urethane-based resins, polyester-based resins, acrylic resins, titanium-based resins, isocyanate-based resins, imine-based resins, and polybutadiene-based resins. Examples of the solvating medium (solvent) used for forming the protective layer include aromatic solvents such as benzene and toluene; alcohol-based solvents such as methanol and ethanol; ketone-based solvents such as acetone and methyl ethyl ketone; ester-based solvents such as ethyl acetate and butyl acetate; and polyhydric alcohol derivatives such as ethylene glycol monomethyl ether.

The urethane resin is preferable since the polar groups of the urethane bond interact with the inorganic thin film layer, the urethane resin also exhibits flexibility due to the presence of amorphous moieties, and thus the damage to the inorganic thin film layer can be suppressed even when a bending load is applied.

The acid value of urethane resin is preferably in a range of 10 to 60 mg KOH/g. The acid value of urethane resin is more preferably in a range of 15 to 55 mg KOH/g, still more preferably in a range of 20 to 50 mg KOH/g. When the acid value of the urethane resin is in the above range, the liquid stability is improved when an aqueous dispersion is prepared, the protective layer can be uniformly deposited on the highly polar inorganic thin film, and thus the coating appearance is favorable.

The urethane resin has a glass transition temperature (Tg) of preferably 80°C or more, more preferably 90°C or more. By setting Tg to 80°C or more, swelling of the protective layer due to molecular motion in the heat-moisture treatment process (temperature rise to temperature retention to temperature fall) can be diminished.

As the urethane resin, it is more preferable to use a urethane resin containing aromatic or aromatic-aliphatic diisocyanate components as a main component from the viewpoint of improving the gas barrier properties.

Among these, it is particularly preferable to contain a meta-xylylene diisocyanate component. By using the resin, the cohesive force of the urethane bond can be further increased by the stacking effect between the aromatic rings, and as a result, favorable gas barrier properties are obtained.

In the present invention, the proportion of aromatic or aromatic-aliphatic diisocyanates in the urethane resin is preferably set to be in a range of 50 mol% or more (50 to 100 mol%) in 100 mol% of polyisocyanate component (F). The proportion of the total amount of aromatic or aromatic-aliphatic diisocyanates is preferably 60 to 100 mol%, more preferably 70 to 100 mol%, still more preferably 80 to 100 mol%. As such a resin, the "TAKELAC (registered trademark) WPB" series commercially available from Mitsui Chemicals, Inc. can be suitably used. When the proportion of the total amount of aromatic or aromatic-aliphatic diisocyanates is less than 50 mol%, there is a possibility that favorable gas barrier properties are not obtained.

The urethane resin preferably has a carboxylic acid group (carboxyl group) from the viewpoint of improving the affinity for the inorganic thin film layer. In order to introduce a carboxylic acid (salt) group into the urethane resin, for example, a polyol compound having a carboxylic acid group such as dimethylolpropionic acid or dimethylolbutanoic acid as a polyol component may be introduced as a copolymerization component. When a carboxylic acid group-containing urethane resin is synthesized and then neutralized with a salt forming agent, a urethane resin in the form of an aqueous dispersion can be obtained. Specific examples of the salt forming agent include trialkylamines such as ammonia, trimethylamine, triethylamine, triisopropylamine, tri-n-propylamine, and tri-n-butylamine; N-alkylmorpholines such as N-methylmorpholine and N-ethylmorpholine; and N-dialkylalkanolamines such as N-dimethylethanolamine and N-diethylethanolamine. These may be used singly or two or more kinds thereof may be used concurrently.

(Laminate)

The biaxially oriented polyester film of the present invention may be used as a base film, and layers of other materials may be laminated thereon to form a laminate. As the lamination method, the layer formed of another material can be bonded to the biaxially oriented polyester film after fabrication or during formation of the film.

For example, one obtained by further forming a heat-sealable resin layer called a sealant on the biaxially oriented polyester film of the present invention or on the biaxially oriented polyester film of the present invention provided with an inorganic vapor deposition layer can be used as a packaging material.

The heat-sealable resin layer is usually formed by an extrusion lamination method or a dry lamination method.

As a thermoplastic polymer that forms the heat-sealable resin layer, any one may be used as long as the adhesive property of sealant can be sufficiently exerted. Polyethylene resins such as HDPE, LDPE, and LLDPE, a polypropylene resin. an ethylene-vinyl acetate copolymer, an ethylene-$\alpha$-olefin random copolymer, an ionomer resin, and the like can be used.

The sealant layer may be a single-layer film or a multilayer film, and may be selected depending on the required function. For example, from the viewpoint of imparting moisture resistance, a multilayer film in which a resin such as an ethylene-cyclic olefin copolymer or polymethylpentene is interposed can be used. In the sealant layer, various additives such as a flame retardant, a slipping agent, an anti-blocking agent, an oxidation inhibitor, a light stabilizer, and a tackifier may be blended.

The thickness of the sealant layer is preferably 10 to 100 $\mu$m, more preferably 20 to 60 $\mu$m.

Examples of the layer configuration of the laminate for packaging material obtained using the biaxially oriented polyester film of the present invention as the base film include base film/gas barrier layer/protective layer, base film/gas barrier layer/protective layer/adhesive layer/sealant layer, base film/gas barrier layer/protective layer/adhesive layer/resin layer/adhesive layer/sealant layer, base film/adhesive layer/resin layer/gas barrier layer/protective layer/adhesive layer/sealant layer, base film/gas barrier layer/protective layer/printing layer/adhesive layer/sealant layer, base film/printing layer/gas barrier layer/protective layer/adhesive layer/sealant layer, base film/gas barrier layer/protective layer/adhesive layer/resin layer/printing layer/adhesive layer/sealant layer, base film/adhesive layer/resin layer/printing layer/gas barrier layer/protective layer/adhesive layer/sealant layer, base film/printing layer/gas barrier layer/protective layer/adhesive layer/resin layer/adhesive layer/sealant layer, base film/printing layer/adhesive layer/resin layer/gas barrier layer/protective layer/adhesive layer/sealant layer, and base film/adhesive layer/resin layer/gas barrier layer/protective layer/printing layer/adhesive layer/sealant layer.

The laminate obtained using the biaxially oriented polyester film of the present invention can be suitably used for applications such as packaged products, various label materials, lid materials, sheet molded products, and laminated tubes. In particular, the laminate is used for packaging bags (for example, pillow bags, pouches such as standing pouches and four side pouches). The thickness of the laminate can be appropriately determined depending on the application. For example, the laminate is used in the form of a film or sheet having a thickness of 5 to 500 $\mu$m, preferably about 10 to 300 $\mu$m.

EXAMPLES

Hereinafter, the present invention will be described in more detail with reference to Examples, but the present invention is not limited to the aspects of these Examples at all and can be appropriately modified without departing from the spirit of the present invention.

A. The method for evaluating the polyester resin is as follows.

[Glass transition turning (Tg)]

Using a differential scanning calorimetry apparatus (Model DSC6220 manufactured by SII Nanotechnology Co., Ltd.), 5 mg of resin sample was melted to 280°C in a nitrogen atmosphere, held for 5 minutes, and then rapidly cooled with liquid nitrogen, and the glass transition temperature thereof was measured from room temperature at a rate of temperature rise of 20°C/min.

[Intrinsic viscosity (IV)]

In 50 ml of a mixed solvent of phenol/1,1,2,2-tetrachloroethane (60/40 (weight ratio)), 0.2 g of polyester resin was dissolved, and the intrinsic viscosity thereof was measured at 30°C using an Ostwald viscometer. The unit is dl/g.

[Content rates of terephthalic acid and isophthalic acid components contained in raw material polyester and polyester constituting film]

The sample was dissolved in a solvent in which chloroform D (manufactured by Euriso-top SAS) and trifluoroacetic acid D1 (manufactured by Euriso-top SAS) were mixed at a ratio of 10 : 1 (volume ratio) to prepare a sample solution. Using NMR ("GEMINI-200"; manufactured by Varian), NMR of protons of the sample solution was measured under the measurement conditions of a temperature of 23°C and a total of 64 times of integration. In the NMR measurement, the peak intensity of a predetermined proton was calculated, and the content rates (mol%) of the terephthalic acid component and the isophthalic acid component in 100 mol% of the acid components were calculated.

[Angle of repose of raw material pellet]

Pellets were dropped onto the center of the end face of a metal cylinder having a diameter of 50 mm and a height of 10 mm using a polyethylene funnel (diameter: 10 mm). The angle formed by the plane of the metal cylinder and the twill of the pellet was measured using a protractor, and this angle was taken as the angle of repose.

B. The evaluation method for the polyester film is as follows.

[Thickness of film]

The film thickness was measured using a dial gauge in conformity with JIS K7130-1999 method A.

[External haze, internal haze, and total haze]

The obtained film was cut into an area of 5 cm in the vertical direction and 5 cm in the horizontal direction, and the total haze was measured at 25°C at all wavelengths of visible light in conformity with JIS-K7136 using a turbidity meter (NDH5000) manufactured by NIPPON DENSHOKU INDUSTRIES Co., Ltd.
In the same manner, the haze (hereinafter referred to as "haze H1") of a laminate having a configuration in which only cedar oil was sandwiched between two quartz glass plates and the haze (hereinafter referred to as "haze H2") of a laminate having a configuration in which a polyester film of which the surface was uniformly wetted with cedar oil was sandwiched between two quartz glass plates were measured.
Next, the internal haze is determined according to the following equation.

```
Internal haze = haze (H2) - haze (H1) ··· Equation 1
```

The external haze is a value determined by subtracting the internal haze from the total haze.
The total haze, internal haze, and external haze all refer to haze at all wavelengths of visible light.

[Arithmetic mean height Sa and maximum height Sz]

The obtained film was cut into an area of 10 cm in the vertical direction and 10 cm in the horizontal direction, and a white laser interferometer (NEW VIEW 8300) manufactured by Zygo was used.
A 20× lens was attached to the interferometer, scanning was performed, and the arithmetic mean height ($\mu$m) and maximum height ($\mu$m) were measured. The measurement was performed in a range of 0.82 $\mu$m in the MD direction and 0.82 $\mu$m in the width direction of one surface, and the surface excluding foreign substances such as un-melted substances, dust and the like was targeted.
The measurement points were arbitrary 10 points of the sample of 10 cm × 10 cm, and the average values were taken as the arithmetic mean height Sa and the maximum height Sz, respectively.
With regard to the variation (%) in the arithmetic mean height Sa, sampling was performed every 1,000 m from the surface layer of the film roll to the winding core in the longitudinal direction of the obtained polyester film roll (width: 2,080 mm, winding length: 63,000 m). The measurement was performed on each sampled film under the conditions. The variation in the longitudinal direction represented by the following Equation [1], where Xmax (N) denotes the maximum value of the acquired arithmetic mean height Sa, Xmin (N) denotes the minimum value, and Xave denotes the average value, was determined.

[Dynamic friction coefficient and static friction coefficient]

A sample film was fabricated by cutting the obtained film into an area of 400 mm in the longitudinal direction and 100 mm in the width direction. This was aged for 12 hours in an atmosphere of 23°C and 65% RH, and divided into a test piece of 300 mm in the vertical direction and 100 mm in the horizontal direction for test table and a test piece of 100 mm in the vertical direction and 100 mm in the width direction for sliding piece.

The test piece for test table was set on the test table, and the test piece for sliding piece was bonded to the bottom surface of a sliding piece having a metal load of 1.5 kg (area size: 39.7 mm$^2$, square) with double-sided tape so that the surfaces in contact with the casting drum faced each other.

The dynamic friction coefficient and the static friction coefficient were measured, respectively, at a sliding speed of the test piece of 200 mm/min, 23°C, and 65% RH by setting the conditions other than these so as to conform with JIS K-7125.

[Number of fine protrusions in area of $4 \times 10^{-12}$ m$^2$ of film surface]

The obtained film was cut into an area of 10 mm in the longitudinal direction and 10 mm in the width direction, and measurement was performed under the following observation conditions using a scanning probe microscope (SPM-9700) manufactured by Shimadzu Corporation, and an image of the measurement surface was captured.

The acquired image (height trace) was subjected to image processing under the following conditions.

Using the particle analysis software of the SPM-9700 series, the number of particles of 3 nm or more (number of protrusions) and the number of particles of less than 3 nm (number of protrusions) were counted in an area of $4 \times 10^{-12}$ m$^2$ (2 $\mu$m $\times$ 2 $\mu$m square) by setting the threshold value of the particles extracted under the following particle analysis conditions to 3 nm. As the number of particles of less than 3 nm (number of protrusions), those of 0.01 nm or more were counted.

The measurement was performed 5 times at different locations, the one having the largest number of counts and the one having the smallest number of counts were excluded, and the average value of the numbers acquired in the rest 3 times was calculated and taken as the number of fine protrusions.

(Observation conditions)

· Cantilever: made of Si (silicon)
· Scanning mode: phase mode
· Scanning speed: 2 Hz
· Scanning range: 2 $\mu$m
· Number of pixels: 256 $\times$ 256
· Offset X: 0 $\mu$m
· Offset Y: 0 $\mu$m
· Scanning angle: 0°
· Operating point: 1.0 V
· P gain: 0.001
· I gain: 1500
· Offset Z: 0 $\mu$m
· Z range: $\times$ 2
· Scanning mode: constant force

(Image processing)

· Tilt correction: mean value in X direction (X), mean value in Y direction (Y), line fit (L)
· Noise line removal: mode (range specification), automatic selection

(Particle analysis)

· Target shape: particle
· XY threshold value: 30%
· Number of pixels to ignore: 5

With regard to the variation (%) in the number of fine protrusions, sampling was performed every 1,000 m from the surface layer of the film roll to the winding core in the longitudinal direction of the obtained polyester film roll (width: 2080 mm, winding length: 63,000 m). The measurement was performed on each sampled film under the conditions. The variation in the longitudinal direction represented by the following Equation [1], where Xmax (N) denotes the maximum value of the acquired number of fine protrusions, Xmin (N) denotes the minimum value, and Xave denotes the average value, was determined.

[Friction-charged electrostatic potential]

A sample film was fabricated by cutting the obtained film into an area of 80 mm in the longitudinal direction and 50 mm in the width direction. This was aged for 16 hours in an atmosphere of 23°C and 50% RH. The friction-charged electrostatic potential was measured using a friction-charged electrostatic potential measuring apparatus (RST-300a) manufactured by DAIEI KAGAKU SEIKI MFG. CO., LTD.
The sample was fixed to the rotating apparatus, the static electricity generated by rubbing against a metal plate at a drum rotating speed of 400 rpm for 60 seconds was measured, and the maximum value was taken as the friction-charged electrostatic potential. The measured friction-charged electrostatic potential was evaluated according to the following criteria.

⊙: Friction-charged electrostatic potential of less than 200 V
○: Friction-charged electrostatic potential of 200 V or more and less than 500 V
△: Friction-charged electrostatic potential of 500 V or more and less than 1,000 V
×: Friction-charged electrostatic potential of 1,000 V or more

[Evaluation of static mark]

The obtained biaxially oriented polyester film row wound at 550 mm in the width direction and 500 m in the longitudinal direction was rewound using a slitter (Model FN105E) manufactured by NISHIMURA MFG. CO., LTD. at a speed of 15 m/min and a winding tension of 100 N/m (unit tension setting).
For static electricity removal at this time, the static eliminator attached to the slitter was turned on, a static eliminating brush ("NSP-2S" manufactured by ACHILLES CORPORATION) was installed between the unwinding roll and the tilt adjusting roller to be on the upper and lower surface sides of the film, and static electricity removal was performed.
The film was unwound from the film edge on the outermost surface of the obtained film roll, removed by 2 m from the film edge, and then sampled 10 cm in the center in the width direction and in a length of 10 cm in the longitudinal direction, and the charged state of the film surface was visualized using a charging distribution determining toner manufactured by Kasuga Electric Works Ltd. The chargeability of the film roll was evaluated according to the following criteria.

⊙: There is no static mark or static mark discharge mark or toner attachment.
○: Static marks or static mark discharge marks are not observed, but toner is attached.
×: Static marks or static mark discharge marks are observed.

[Foreign substance (number of defects) in film]

A sample film was fabricated by cutting the obtained film into an area of 250 mm in the longitudinal direction and 250 mm in the width direction. The number of foreign substances having a diameter of 1 mm or more when this was observed under a microscope with a scale in the direction perpendicular to the film surface was counted in the entire range of 250 mm in the longitudinal direction and 250 mm in the width direction ($0.0625 \, m^2$). This was performed for 20 sample films, the total number of foreign substances acquired was divided by the total observation area ($1.25 \, m^2$), and the resultant was converted to the number of foreign substances (pieces/$m^2$) per unit area of $1 \, m^2$, and rounded off to the first decimal place. The number of foreign substances in the measured film was evaluated according to the following criteria.

○: Number of foreign substances (number of defects) of less than 1.0 pieces/$m^2$ in film
×: Number of foreign substances (number of defects) of 1.0 pieces/$m^2$ or more in film

[Wetting tension]

The corona-treated surface was measured in conformity with JIS-K-7100 according to the following procedure except that the obtained film was cut into an area of 400 mm in the longitudinal direction and 300 mm in the width direction, and aged for 24 hours at a temperature of 23°C and a relative humidity of 50% RH, and the test room atmosphere was set to a temperature of 23°C and a relative humidity of 50% RH.

The test piece was placed on the substrate of the hand coater, few drops of the liquid mixture for test were dropped onto the test piece, and the wire bar was immediately pulled to spread the test mixture. In the case of spreading the liquid mixture for test using a cotton swab or a brush, the liquid is spread quickly over an area of at least 6 cm$^2$. The amount of liquid is adjusted so as not to form a pool but form a thin layer.

The wetting tension is judged by observing the liquid film of the liquid mixture for test in a bright place and the state of the liquid film after 3 seconds. The liquid film is wet when the liquid film does not break and keeps the state of being applied for 3 seconds or more.

When the wetting lasts for 3 seconds or more, the test piece is then advanced to the next liquid mixture having a higher surface tension.

On the contrary, when the liquid film breaks in 3 seconds or less, the test piece is advanced to the next liquid mixture having a lower surface tension. This operation is repeated to select a liquid mixture that can accurately wet the surface of the test piece in 3 seconds.

A new cotton swab is used for each test. Brushes or wire bars are washed with methanol and dried after each use since the evaporation of residual liquid changes the composition and the surface tension.

The operation to select a liquid mixture that can wet the surface of the corona-treated surface in 3 seconds is performed at least 3 times. The surface tension of the liquid mixture thus selected is reported as the wetting tension of the film.

[Fabrication of laminated body for evaluation]

An un-stretched polypropylene film having a thickness of 70 μm ("P1147" manufactured by TOYOBO CO., LTD.) as a heat-sealable resin layer was bonded to a polyester film using a urethane-based two-component effect adhesive ("TAKELAC (registered trademark) A525S" and "TAKENATE (registered trademark) A50" manufactured by Mitsui Chemicals, Inc. were blended at a ratio of 13.5 : 1 (weight ratio)) by a dry lamination method. Aging was performed at 40°C for 4 days to obtain a laminated body. The thickness of the adhesive layer formed of the urethane-based two-component curable adhesive after drying was about 4 μm in all cases.

[Laminate strength]

The laminated body described above was cut into a test piece having a width of 15 mm and a length of 200 mm and subjected to the measurement of laminate strength using a Tensilon universal material testing machine ("Tensilon UMT-II-500 type" manufactured by Toyo Baldwin Co., Ltd.) at a temperature of 23°C and a relative humidity of 65%.

As the laminate strength, the strength when the laminated film and the heat-sealable resin layer were peeled off from each other at a peeling angle of 180 degrees and a tension speed of 200 mm/min was taken.

The details of the raw material resins chips used in the present Examples and Comparative Examples are described below.

(Polyester resin A)

As the PET resin regenerated from PET bottles, which was used in the fabrication of the biaxially stretched polyester film described later, a resin synthesized by the following method was used.

Foreign substances such as the remaining beverages were washed away from the PET bottles for beverages, and then the PET bottles for beverages were crushed to obtain flakes. The obtained flakes were washed with a 3.5% by weight solution of sodium hydroxide at a flake concentration of 10% by weight and 85°C for 30 minutes under stirring. After alkaline cleaning, the flakes were taken out and washed with distilled water at a flake concentration of 10% by weight and 25°C for 20 minutes under stirring. This washing with water was repeated 2 times more by exchanging distilled water. After washing with water, the flakes were dried and then melted using an extruder, finer foreign substances were filtered out 2 times more by changing the filter to one having a smaller opening size in order, and finer foreign substances were filtered out using a filter having the smallest opening size of 50 μm on the third time to obtain polyester resin A having an intrinsic viscosity of 0.69 dl/g, an isophthalic acid content rate of 2 mol%, and an angle of repose of 46 degrees.

(Polyester resin B)

A polyester resin B having an intrinsic viscosity of 0.69 dl/g, an isophthalic acid content rate of 2 mol%, and an angle of repose of 46 degrees was obtained in the same manner as the polyester resin A except that alkaline cleaning was not performed in the production process of the polyester resin A.

(Polyester resin C)

As a fossil fuel-derived PET resin to be used in the fabrication of a biaxially oriented polyester film described later, terephthalic acid//ethylene glycol = 100//100 (mol%) (manufactured by TOYOBO CO., LTD., intrinsic viscosity: 0.62 dl/g, angle of repose: 45 degrees) was used.

(Polyester resin D)

The temperature of the esterification reaction can was raised, and at the time point at which the temperature reached 200°C, a slurry containing terephthalic acid [86.4 parts by mass] and ethylene glycol [64.4 parts by mass] was put, and antimony trioxide [0.017 parts by mass] and triethylamine [0.16 parts by mass] were added as catalysts while stirring was performed. Next, the temperature was raised by heating, and the pressure esterification reaction was conducted at a gauge pressure of 0.34 MPa and 240°C. Thereafter, the inside of the esterification reaction can was returned to normal pressure, and magnesium acetate tetrahydrate [0.071 parts by mass] and then trimethyl phosphate [0.014 parts by mass] were added. The temperature was further raised to 260°C over 15 minutes, trimethyl phosphate [0.012 parts by mass] and then sodium acetate [0.0036 parts by mass] were added. After 15 minutes, dispersion treatment was performed using a highpressure disperser, and ethylene glycol slurry of amorphous silica particles having an average particle size of 1.3 μm was added by 3.0 parts by weight based on the particle content. These silica particles are particles obtained by preparing an ethylene glycol slurry in advance, subjecting the slurry to centrifugal separation treatment to cut coarse particles by 35%, and then filtering the resultant slurry through a metal filter having an opening of 5 μm. After 15 minutes, the obtained esterification reaction product was transferred to a polycondensation reaction can, and a polycondensation reaction was conducted under reduced pressure at 280°C to obtain a polyester resin D having a limiting viscosity of 0.60 dl/g and an angle of repose of 37 degrees.

(Polyester resins E to P)

Polyester resins E to P were obtained in the same manner as the polyester resin D except that the shape, average particle size and content of silica particles were changed.

The raw material resin chips are as presented in Table 1. The abbreviations in the table are as follows.

TPA: Terephthalic acid
EG: Ethylene glycol

[Table 1]

| | Dicarboxylic acid component | Polyhydric alcohol component | Isophthalic acid content rate | Silica | | SiO$_2$ content | Angle of repose | Limiting viscosity |
| | | | | Shape | Weight average particle size | | | |
| | TPA | EG | | | | | | |
| | Mol% | Mol% | Mol% | - | μm | ppm | Degrees | dl/g |
| Polyester resin A | 98 | 100 | 2 | - | - | - | 46 | 0.69 |
| Polyester resin B | 98 | 100 | 2 | - | - | - | 46 | 0.69 |
| Polyester resin C | 100 | 100 | 0 | - | - | - | 45 | 0.62 |

(continued)

| | Dicarboxylic acid component | Polyhydric alcohol component | Isophthalic acid content rate | Silica | | SiO$_2$ content | Angle of repose | Limiting viscosity |
|---|---|---|---|---|---|---|---|---|
| | TPA | EG | | Shape | Weight average particle size | | | |
| | Mol% | Mol% | Mol% | - | μm | ppm | Degrees | dl/g |
| Polyester resin D | 100 | 100 | 0 | Amorphous | 1.3 | 30000 | 37 | 0.60 |
| Polyester resin E | 100 | 100 | 0 | Spherical | 1.0 | 30000 | 36 | 0.62 |
| Polyester resin F | 100 | 100 | 0 | Amorphous | 1.7 | 30000 | 37 | 0.60 |
| Polyester resin G | 100 | 100 | 0 | Amorphous | 2.4 | 30000 | 38 | 0.62 |
| Polyester resin H | 100 | 100 | 0 | Spherical | 0.5 | 30000 | 38 | 0.62 |
| Polyester resin I | 100 | 100 | 0 | Amorphous | 1.3 | 100000 | 35 | 0.60 |
| Polyester resin J | 100 | 100 | 0 | Amorphous | 1.3 | 300000 | 34 | 0.60 |
| Polyester resin K | 100 | 100 | 0 | Amorphous | 1.3 | 15000 | 35 | 0.60 |
| Polyester resin L | 100 | 100 | 0 | Amorphous | 1.3 | 300000 | 41 | 0.60 |
| Polyester resin M | 100 | 100 | 0 | Spherical | 1.0 | 100000 | 35 | 0.62 |
| Polyester resin N | 100 | 100 | 0 | Amorphous | 1.7 | 100000 | 35 | 0.60 |
| Polyester resin O | 100 | 100 | 0 | Amorphous | 2.4 | 100000 | 34 | 0.62 |
| Polyester resin P | 100 | 100 | 0 | Spherical | 0.5 | 100000 | 35 | 0.62 |

[Example 1]

A film having a three-layer configuration was formed using three extruders. The base layer (B) was composed of 98.7% by mass of polyester resin A and 1.3% by mass of polyester resin D, and the surface layer (A) was composed of 93.3% by mass of polyester resin A and 6.7% by mass of polyester resin D. Here, the polyester resin D was put using an inner pipe as illustrated in Fig. 4 so as to be mixed with other raw materials before entering the extruder. After each raw material resin was dried, the surface layer (A) forming mixed resin was melt-extruded from the first and third extruders at a resin temperature of 285°C, and the base layer (B) forming mixed resin was melted at a resin temperature of 285°C using the second extruder. These resins were merged and laminated so that the thickness ratio in the T-die was 1/10/1 (μm) in the order of surface layer (A)/base layer (B)/surface layer (A) from the side coming into contact with the casting drum, discharged from a T-shaped mouthpiece, and cooled and solidified on the casting drum having a surface temperature of 30°C to obtain an un-stretched polyethylene terephthalate sheet.

At that time, static electricity was applied using a wire-shaped electrode having a diameter of 0.15 mm, and the sheet was brought into close contact with a cooling drum to obtain a three-layer un-stretched film.

The obtained un-stretched film was heated to 115°C and stretched in the longitudinal direction at a total draw ratio of 4.5 times by three-stage stretching in which the un-stretched film was stretched 1.24 times at the first stage, 1.4 times at the second stage, and 2.6 times at the third stage.

Subsequently, the stretched film was stretched in the width direction at a temperature of 140°C and a draw ratio of 4.3 times, heat-set at 245°C, and subjected to 5% heat relaxation treatment in the width direction. Corona treatment was performed on the layer A surface on the side in contact with the chill roll under the condition of 40 W·min/m$^2$, and the film was wound into a roll using a winder to fabricate a master roll (roll length: 26,000 m, width: 8,000 mm) of a biaxially oriented polyester film having a thickness of 12 μm.

The biaxially oriented polyester film was unwound from the obtained master roll, and the film roll was wound around a winding core having a diameter of 6 inches (152.2 mm) while performing slitting at a width of 2,200 mm and applying surface pressure to the film roll using a contact roll and tension to the film using a 2-axis turret winder.

Table 2 presents the raw material composition and film forming conditions of the obtained film and the physical properties and evaluation results of the obtained film. The evaluation of film was performed on the layer A surface on the side in contact with the chill roll.

[Example 2]

A biaxially stretched film was formed in the same manner as in Example 1 except that the polyester resin A of the surface layer (A) was changed to 95.0% by mass and the polyester resin D was changed to 5.0% by mass as raw materials, and a biaxially oriented polyester film having a thickness of 12 μm was obtained. Table 2 presents the raw material composition and film forming conditions of the obtained film and the physical properties and evaluation results of the obtained film. The evaluation of film was performed on the layer A surface on the side in contact with the chill roll.

[Example 3]

A biaxially stretched film was formed in the same manner as in Example 1 except that the polyester resin A of the surface layer (A) was changed to 96.0% by mass and the polyester resin E was changed to 4.0% by mass as raw materials, and a biaxially oriented polyester film having a thickness of 12 μm was obtained. Table 2 presents the raw material composition and film forming conditions of the obtained film and the physical properties and evaluation results of the obtained film. The evaluation of film was performed on the layer A surface on the side in contact with the chill roll.

[Example 4]

A biaxially stretched film was formed in the same manner as in Example 1 except that the polyester resin A of the surface layer (A) was changed to 92.0% by mass and the polyester resin F was changed to 8.0% by mass as raw materials, and a biaxially oriented polyester film having a thickness of 12 μm was obtained. Table 2 presents the raw material composition and film forming conditions of the obtained film and the physical properties and evaluation results of the obtained film. The evaluation of film was performed on the layer A surface on the side in contact with the chill roll.

[Comparative Example 1]

A biaxially stretched film was formed in the same manner as in Example 1 except that the polyester resin of the surface layer (A) was changed to the polyester resin C as a raw material, and a biaxially oriented polyester film having a thickness of 12 μm was obtained. Table 2 presents the raw material composition and film forming conditions of the obtained film and the physical properties and evaluation results of the obtained film. The evaluation of film was performed on the layer A surface on the side in contact with the chill roll.

[Comparative Example 2]

A biaxially stretched film was formed in the same manner as in Example 1 except that the polyester resin A of the surface layer (A) was changed to 95.0% by mass and the polyester resin G was changed to 5.0% by mass as raw materials, and a biaxially oriented polyester film having a thickness of 12 μm was obtained. Table 2 presents the raw material composition and film forming conditions of the obtained film and the physical properties and evaluation results of the obtained film. The evaluation of film was performed on the layer A surface on the side in contact with the chill roll.

[Comparative Example 3]

A biaxially stretched film was formed in the same manner as in Example 1 except that the polyester resin A of the surface layer (A) was changed to 95.0% by mass and the polyester resin H was changed to 5.0% by mass as raw materials, and a biaxially oriented polyester film having a thickness of 12 μm was obtained. Table 2 presents the raw material composition and film forming conditions of the obtained film and the physical properties and evaluation results of the obtained film. The evaluation of film was performed on the layer A surface on the side in contact with the chill roll.

[Example 5]

A biaxially stretched film was formed in the same manner as in Comparative Example 1 except that the polyester resin of the surface layer (A) was changed to the polyester resin B as a raw material, and a biaxially oriented polyester film having a thickness of 12 μm was obtained. Table 2 presents the raw material composition and film forming conditions of the obtained film and the physical properties and evaluation results of the obtained film. The evaluation of film was performed on the layer A surface on the side in contact with the chill roll.

[Reference Example 1]

A film having a three-layer configuration was formed using three extruders in the same manner as in Example 1. The base layer (B) was composed of 98.7% by mass of polyester resin A and 1.3% by mass of polyester resin D, and the surface layer (A) was composed of 93.3% by mass of polyester resin A and 6.7% by mass of polyester resin D. However, the polyester resin A and the polyester resin D were all put into the extruder in a mixed state. In other words, the polyester resin D entered the extruder in a state of being mixed at the upper part of the hopper without using the inner pipe. After each raw material resin was dried, the surface layer (A) forming mixed resin was melt-extruded from the first and third extruders at a resin temperature of 285°C, and the base layer (B) forming mixed resin was melted at a resin temperature of 285°C using the second extruder. These resins were merged and laminated so that the thickness ratio in the T-die was 1/10/1 (μm) in the order of surface layer (A)/base layer (B)/surface layer (A) from the side coming into contact with the casting drum, discharged from a T-shaped mouthpiece, and cooled and solidified on the casting drum having a surface temperature of 30°C to obtain an un-stretched polyethylene terephthalate sheet. At that time, static electricity was applied using a wire-shaped electrode having a diameter of 0.15 mm, and the sheet was brought into close contact with a cooling drum to obtain a three-layer un-stretched film.

The obtained un-stretched film was heated to 115°C and stretched in the longitudinal direction at a total draw ratio of 4.5 times by three-stage stretching in which the un-stretched film was stretched 1.24 times at the first stage, 1.4 times at the second stage, and 2.6 times at the third stage.

Subsequently, the stretched film was stretched in the width direction at a temperature of 140°C and a draw ratio of 4.3 times, heat-set at 245°C, and subjected to 5% heat relaxation treatment in the width direction. Corona treatment was performed on the layer A surface on the side in contact with the chill roll under the condition of 40 W·min/m², and the film was wound into a roll using a winder to fabricate a master roll (roll length: 26,000 m, width: 8,000 mm) of a biaxially oriented polyester film having a thickness of 12 μm.

The biaxially oriented polyester film was unwound from the obtained master roll, and the film roll was wound around a winding core having a diameter of 6 inches (152.2 mm) while performing slitting at a width of 2,200 mm and applying surface pressure to the film roll using a contact roll and tension to the film using a 2-axis turret winder.

Table 2 presents the raw material composition and film forming conditions of the obtained film and the physical properties and evaluation results of the obtained film. The evaluation of film was performed on the layer A surface on the side in contact with the chill roll.

As the results of Table 2, the films of Examples 1 to 4 had the number of fine protrusions each having a height of 3 nm or more, the number of fine protrusions each having a height of less than 3 nm, and the arithmetic mean height Sa within the specified ranges, and thus had few quality defects due to charging such as static marks and static mark discharge marks, had excellent performance after secondary processing such as coating and vapor deposition, were environmentally friendly polyester films that were obtained using polyester resins recycled from the market and society, including PET bottles, contained few foreign substances, and had little variations in physical properties in the longitudinal direction when being wound into a long film roll having a long winding length as well.

The obtained film of Comparative Example 1 had the number of fine protrusions each having a height of 3 nm or more, the number of fine protrusions each having a height of less than 3 nm, and the arithmetic mean height Sa within the specified ranges, and thus had few quality defects due to charging such as static marks and static mark discharge marks, had excellent performance after secondary processing such as coating and vapor deposition, but was a conventional fossil fuel-derived polyester resin, and thus was inferior as an environmentally friendly polyester film.

The obtained film of Comparative Example 2 had the number of fine protrusions each having a height of 3 nm or more within the range, but had a small number of fine protrusions each having a height of less than 3 nm, thus had a high friction-charged electrostatic potential, and was poor in the static mark evaluation. Moreover, the film had a too large arithmetic mean height Sa, thus had a large external haze, and was inferior in transparency.

The obtained film of Comparative Example 3 had the number of fine protrusions each having a height of 3 nm or more within the range, but had a small number of fine protrusions each having a height of less than 3 nm, thus had a high friction-charged electrostatic potential, and was poor in the static mark evaluation.

The obtained film of Example 5 had the number of fine protrusions each having a height of 3 nm or more, the number of fine protrusions each having a height of less than 3 nm, and the arithmetic mean height Sa within the specified ranges, and thus had few quality defects due to charging such as static marks and static mark discharge marks, had excellent performance after secondary processing such as coating and vapor deposition, but contained a large number of foreign substances since polyester resin recycled from the market and society, including PET bottles that had not undergone alkaline cleaning was used in the production process thereof.

In Reference Example 1, since the inner pipe was not used to supply the raw materials, and the raw material ratio fluctuated greatly in the longitudinal direction because of the segregation of raw materials, the number of fine protrusions each having a height of 3 nm or more and the number of fine protrusions each having a height of less than 3 nm of the obtained film varied greatly in the longitudinal direction, it was possible to obtain a favorable film having physical properties equivalent to those in Examples 1 to 4 partially in the film roll, but the film roll was inferior as a film roll.

[Table 2A]

| | | | Example 1 | | | Example 2 | | | Example 3 | | | Example 4 | | |
|---|---|---|---|---|---|---|---|---|---|---|---|---|---|---|
| | | | Layer A | Layer B | Layer A | Layer A | Layer B | Layer A | Layer A | Layer B | Layer A | Layer A | Layer B | Layer A |
| Resin chip mixing ratio (% by mass) | | Polyester resin A | 93.3 | 98.7 | 93.3 | 95 | 98.7 | 95 | 96 | 98.7 | 96 | 92 | 98.7 | 92 |
| | | Polyester resin B | – | – | – | – | – | – | – | – | – | – | – | – |
| | | Polyester resin C | – | – | – | – | – | – | – | – | – | – | – | – |
| | | Polyester resin D | 6.7 | 1.3 | 6.7 | 5 | 1.3 | 5 | – | – | – | – | – | – |
| | | Polyester resin E | – | – | – | – | – | – | 4 | 1.3 | 4 | – | – | – |
| | | Polyester resin F | – | – | – | – | – | – | – | – | – | 8 | 1.3 | 8 |
| | | Polyester resin G | – | – | – | – | – | – | – | – | – | – | – | – |
| | | Polyester resin H | – | – | – | – | – | – | – | – | – | – | – | – |
| | | Shape of silica | Amorphous | | | Amorphous | | | Spherical | | | Amorphous | | |
| | | Weight average particle size of silica (μm) | 1.3 | | | 1.3 | | | 1.0 | | | 1.7 | | |
| | | Amount of silica added (ppm by weight) | 2000 | 400 | 2000 | 1500 | 400 | 1500 | 1200 | 400 | 1200 | 2400 | 400 | 2400 |
| Film forming step | | Inner pipe | Presence | | | Presence | | | Presence | | | Presence | | |
| | | Angle of repose (degrees) * Polyester resin pellets containing particles | 37 | | | 37 | | | 36 | | | 37 | | |
| | | Isophthalic acid content rate (mol%) | 1.96 | | | 1.96 | | | 1.97 | | | 1.95 | | |
| | | Thickness of T-die layer (μm) | A/B/A = 1/10/1 | | | A/B/A = 1/10/1 | | | A/B/A = 1/10/1 | | | A/B/A = 1/10/1 | | |
| | | Application of static electricity | Wire-shaped electrode Diameter 0.15 mm | | | Wire-shaped electrode Diameter 0.15 mm | | | Wire-shaped electrode Diameter 0.15 mm | | | Wire-shaped electrode Diameter 0.15 mm | | |
| | | Chill roll cooling temperature (°C) | 30 | | | 30 | | | 30 | | | 30 | | |
| | | Stretching temperature in longitudinal direction (°C) | 115 | | | 115 | | | 115 | | | 115 | | |
| | | First stage draw ratio in longitudinal direction (times) | 1.24 | | | 1.24 | | | 1.24 | | | 1.24 | | |
| | | Second stage draw ratio in longitudinal direction (times) | 1.4 | | | 1.4 | | | 1.4 | | | 1.4 | | |
| | | Third stage draw ratio in longitudinal direction (times) | 2.6 | | | 2.6 | | | 2.6 | | | 2.6 | | |
| | | Draw ratio in longitudinal direction (times) | 4.5 | | | 4.5 | | | 4.5 | | | 4.5 | | |
| | | Stretching temperature in width direction (°C) | 140 | | | 140 | | | 140 | | | 140 | | |
| | | Draw ratio in width direction (times) | 4.3 | | | 4 | | | 4.3 | | | 4.3 | | |
| | | Heat setting temperature (°C) | 245 | | | 245 | | | 245 | | | 245 | | |
| | | Relaxation rate in width direction (%) | 5 | | | 5 | | | 5 | | | 5 | | |
| | | Film thickness (μm) | 12 | | | 12 | | | 12 | | | 12 | | |

| Film properties | | | | | | |
|---|---|---|---|---|---|---|
| | Number of defects (pieces/1000 m²) | | ○ | ○ | ○ | ○ |
| | Isophthalic acid content rate (mol%) | | 1.96 | 1.96 | 1.97 | 1.95 |
| | Recycled PET resin ratio (%) * In the film | | 97.8 | 98.1 | 98.3 | 97.6 |
| | Number of fine protrusions each having height of less than 3 nm per 4 × 10⁻¹² m² (pieces) | Average value (Xave) | 347 | 267 | 476 | 572 |
| | | Maximum value (Xmax) | 357 | 280 | 495 | 601 |
| | | Minimum value (Xmin) | 344 | 259 | 466 | 549 |
| | | Variation in longitudinal direction | 4 | 8 | 6 | 9 |
| | Number of fine protrusions each having height of 3 nm or more per 4 × 10⁻¹² m² (pieces) | Average value (Xave) | 544 | 372 | 331 | 352 |
| | | Maximum value (Xmax) | 560 | 391 | 344 | 370 |
| | | Minimum value (Xmin) | 539 | 361 | 324 | 338 |
| | | Variation in longitudinal direction | 4 | 8 | 6 | 9 |
| | Arithmetic mean height Sa (µm) | Average value (Xave) | 0.020 | 0.019 | 0.015 | 0.021 |
| | | Maximum value (Xmax) | 0.021 | 0.020 | 0.016 | 0.022 |
| | | Minimum value (Xmin) | 0.020 | 0.018 | 0.015 | 0.020 |
| | | Variation in longitudinal direction | 4 | 8 | 6 | 9 |
| | Static friction coefficient | | 0.39 | 0.40 | 0.40 | 0.37 |
| | Dynamic friction coefficient | | 0.37 | 0.39 | 0.37 | 0.36 |
| | Maximum height Sz (µm) | | 1.6 | 1.6 | 1.4 | 1.8 |
| | External haze (%) | | 1.3 | 1.2 | 0.5 | 1.3 |
| | Internal haze (%) | | 1.6 | 1.6 | 1.5 | 1.7 |
| | Friction-charged electrostatic potential (V) | | 112 | 294 | 153 | 109 |
| | Evaluation of static mark | | ◎ | ○ | ◎ | ◎ |
| | Wetting tension (mN/m) | | 53 | 52 | 53 | 53 |
| | Laminate strength (N/15 mm) | | 6.9 | 6.8 | 6.9 | 6.9 |

[Table 2B]

| | | | Comparative Example 1 | | | Comparative Example 2 | | | Comparative Example 3 | | | Example 5 | | | Reference Example 1 | | |
|---|---|---|---|---|---|---|---|---|---|---|---|---|---|---|---|---|---|
| | | | Layer A | Layer B | Layer A | Layer A | Layer B | Layer A | Layer A | Layer B | Layer A | Layer A | Layer B | Layer A | Layer A | Layer B | Layer A |
| Resin chip mixing ratio (% by mass) | | Polyester resin A | – | – | – | 95 | 98.7 | 95 | 95 | 98.7 | 95 | – | – | – | 93.3 | 98.7 | 93.3 |
| | | Polyester resin B | – | – | – | – | – | – | – | – | – | 93.3 | 98.7 | 93.3 | – | – | – |
| | | Polyester resin C | 93.3 | 98.7 | 93.3 | – | – | – | – | – | – | – | – | – | – | – | – |
| | | Polyester resin D | 6.7 | 1.3 | 6.7 | – | – | – | – | – | – | 6.7 | 1.3 | 6.7 | 6.7 | 1.3 | 6.7 |
| | | Polyester resin E | – | – | – | – | – | – | – | – | – | – | – | – | – | – | – |
| | | Polyester resin F | – | – | – | – | – | – | – | – | – | – | – | – | – | – | – |
| | | Polyester resin G | – | – | – | 5 | 1.3 | 5 | – | – | – | – | – | – | – | – | – |
| | | Polyester resin H | – | – | – | – | – | – | 5 | 1.3 | 5 | – | – | – | – | – | – |
| | | Shape of silica | Amorphous | | | Amorphous | | | Spherical | | | Amorphous | | | Amorphous | | |
| | | Weight average particle size of silica (µm) | 1.3 | | | 2.7 | | | 0.5 | | | 1.3 | | | 1.3 | | |
| | | Amount of silica added (ppm by weight) | 2000 | 400 | 2000 | 1500 | 400 | 1500 | 1500 | 400 | 1500 | 2000 | 400 | 2000 | 2000 | 400 | 2000 |
| Film forming step | | Inner pipe | Presence | | | Presence | | | Presence | | | Presence | | | Absence | | |
| | | Angle of repose (degrees) * Polyester resin pellets containing particles | 37 | | | 38 | | | 38 | | | 37 | | | 37 | | |
| | | Isophthalic acid content rate (mol%) | 0.00 | | | 1.96 | | | 1.96 | | | 1.96 | | | 1.96 | | |
| | | Thickness of T-die layer (µm) | A/B/A = 1/10/1 | | | A/B/A = 1/10/1 | | | A/B/A = 1/10/1 | | | A/B/A = 1/10/1 | | | A/B/A = 1/10/1 | | |
| | | Application of static electricity | Wire-shaped electrode Diameter 0.15 mm | | | Wire-shaped electrode Diameter 0.15 mm | | | Wire-shaped electrode Diameter 0.15 mm | | | Wire-shaped electrode Diameter 0.15 mm | | | Wire-shaped electrode Diameter 0.15 mm | | |
| | | Chill roll cooling temperature (°C) | 30 | | | 30 | | | 30 | | | 30 | | | 30 | | |
| | | Stretching temperature in longitudinal direction (°C) | 115 | | | 115 | | | 115 | | | 115 | | | 115 | | |
| | | First stage draw ratio in longitudinal direction (times) | 1.24 | | | 1.24 | | | 1.24 | | | 1.24 | | | 1.24 | | |
| | | Second stage draw ratio in longitudinal direction (times) | 1.4 | | | 1.4 | | | 1.4 | | | 1.4 | | | 1.4 | | |
| | | Third stage draw ratio in longitudinal direction (times) | 2.6 | | | 2.6 | | | 2.6 | | | 2.6 | | | 2.6 | | |
| | | Draw ratio in longitudinal direction (times) | 4.5 | | | 4.5 | | | 4.5 | | | 4.5 | | | 4.5 | | |
| | | Stretching temperature in width direction (°C) | 140 | | | 140 | | | 140 | | | 140 | | | 140 | | |
| | | Draw ratio in width direction (times) | 4.3 | | | 4.3 | | | 4.3 | | | 4.3 | | | 4.3 | | |
| | | Heat setting temperature (°C) | 245 | | | 245 | | | 245 | | | 245 | | | 245 | | |
| | | Relaxation rate in width direction (%) | 5 | | | 5 | | | 5 | | | 5 | | | 5 | | |
| | | Film thickness (µm) | 12 | | | 12 | | | 12 | | | 12 | | | 12 | | |

| Film Properties | | | | | | |
|---|---|---|---|---|---|---|
| Number of defects (pieces/1000 m²) | | ○ | ○ | ○ | × | ○ |
| Isophthalic acid content rate (mol%) | | 0.00 | 1.96 | 1.96 | 1.96 | 1.96 |
| Recycled PET resin ratio (%) * In the film | | 0.00 | 98.1 | 98.1 | 97.8 | 97.8 |
| Number of fine protrusions each having height of less than 3 nm per 4 × 10⁻¹² m² (pieces) | Average value (Xave) | 361 | 71 | 216 | 354 | 329 |
| | Maximum value (Xmax) | 379 | 75 | 229 | 372 | 365 |
| | Minimum value (Xmin) | 347 | 68 | 205 | 340 | 237 |
| | Variation in longitudinal direction | 9 | 10 | 11 | 9 | 39 |
| Number of fine protrusions each having height of 3 nm or more per 4 × 10⁻¹² m² (pieces) | Average value (Xave) | 532 | 313 | 321 | 539 | 551 |
| | Maximum value (Xmax) | 559 | 332 | 340 | 566 | 612 |
| | Minimum value (Xmin) | 511 | 300 | 305 | 517 | 408 |
| | Variation in longitudinal direction | 9 | 10 | 11 | 9 | 37 |
| Arithmetic mean height Sa (μm) | Average value (Xave) | 0.021 | 0.030 | 0.008 | 0.020 | 0.022 |
| | Maximum value (Xmax) | 0.022 | 0.032 | 0.008 | 0.021 | 0.025 |
| | Minimum value (Xmin) | 0.020 | 0.029 | 0.008 | 0.019 | 0.017 |
| | Variation in longitudinal direction | 9 | 10 | 11 | 9 | 36 |
| Static friction coefficient | | 0.38 | 0.42 | 0.45 | 0.39 | 0.39 |
| Dynamic friction coefficient | | 0.37 | 0.40 | 0.40 | 0.38 | 0.38 |
| Maximum height $S_z$ (μm) | | 1.6 | 2.4 | 0.2 | 1.6 | 1.6 |
| External haze (%) | | 1.3 | 2.0 | 1.1 | 1.4 | 1.4 |
| Internal haze (%) | | 1.6 | 1.1 | 1.1 | 1.6 | 1.7 |
| Friction-charged electrostatic potential (V) | | 117 | 1454 | 1360 | 121 | 129/1381 |
| Evaluation of static mark | | ⊚ | × | × | ⊚ | ⊚/× |
| Wetting tension (mN/m) | | 52 | 54 | 51 | 53 | 52 |
| Laminate strength (N/15 mm) | | 5.2 | 7.0 | 6.7 | 6.9 | 6.8 |

[Example 6]

A biaxially stretched film was formed in the same manner as in Example 1 except that the polyester resin A of the surface layer (A) was changed to 98.0% by mass and the polyester resin I was changed to 2.0% by mass and the polyester resin A of the base layer (B) was changed to 99.6% by mass and the polyester resin I was changed to 0.4% by mass as raw materials, and a biaxially oriented polyester film having a thickness of 12 μm was obtained. Table 3 presents the raw material composition and film forming conditions of the obtained film and the physical properties and evaluation results of the obtained film. The evaluation of film was performed on the layer A surface on the side in contact with the chill roll.

[Example 7]

A biaxially stretched film was formed in the same manner as in Example 1 except that the polyester resin A of the surface layer (A) was changed to 99.33% by mass and the polyester resin J was changed to 0.67% by mass and the polyester resin A of the base layer (B) was changed to 99.87% by mass and the polyester resin J was changed to 0.13% by mass as raw materials, and a biaxially oriented polyester film having a thickness of 12 μm was obtained. Table 3 presents the raw material composition and film forming conditions of the obtained film and the physical properties and evaluation results of the obtained film. The evaluation of film was performed on the layer A surface on the side in contact with the chill roll.

[Example 8]

A biaxially stretched film was formed in the same manner as in Example 1 except that the polyester resin A of the surface layer (A) was changed to 99.5% by mass and the polyester resin J was changed to 0.5% by mass and the polyester resin A of the base layer (B) was changed to 99.87% by mass and the polyester resin J was changed to 0.13% by mass as raw materials, and a biaxially oriented polyester film having a thickness of 12 μm was obtained. Table 3 presents the raw material composition and film forming conditions of the obtained film and the physical properties and evaluation results of the obtained film. The evaluation of film was performed on the layer A surface on the side in contact with the chill roll.

[Example 9]

A biaxially stretched film was formed in the same manner as in Example 1 except that the polyester resin A of the surface layer (A) was changed to 99.6% by mass and the polyester resin M was changed to 0.4% by mass and the polyester resin A of the base layer (B) was changed to 99.87% by mass and the polyester resin M was changed to 0.13% by mass as raw materials, and a biaxially oriented polyester film having a thickness of 12 μm was obtained. Table 3 presents the raw material composition and film forming conditions of the obtained film and the physical properties and evaluation results of the obtained film. The evaluation of film was performed on the layer A surface on the side in contact with the chill roll.

[Example 10]

A biaxially stretched film was formed in the same manner as in Example 1 except that the polyester resin A of the surface layer (A) was changed to 99.2% by mass and the polyester resin N was changed to 0.8% by mass and the polyester resin A of the base layer (B) was changed to 99.87% by mass and the polyester resin N was changed to 0.13% by mass as raw materials, and a biaxially oriented polyester film having a thickness of 12 μm was obtained. Table 3 presents the raw material composition and film forming conditions of the obtained film and the physical properties and evaluation results of the obtained film. The evaluation of film was performed on the layer A surface on the side in contact with the chill roll.

[Comparative Example 4]

A biaxially stretched film was formed in the same manner as in Example 1 except that the polyester resin A of the surface layer (A) was changed to 99.5% by mass and the polyester resin O was changed to 0.5% by mass and the polyester resin A of the base layer (B) was changed to 99.87% by mass and the polyester resin O was changed to 0.13% by mass as raw materials, and a biaxially oriented polyester film having a thickness of 12 μm was obtained. Table 3 presents the raw material composition and film forming conditions of the obtained film and the physical properties and evaluation results of the obtained film. The evaluation of film was performed on the layer A surface on the side in contact with the chill roll.

[Comparative Example 5]

A biaxially stretched film was formed in the same manner as in Example 1 except that the polyester resin A of the surface layer (A) was changed to 99.5% by mass and the polyester resin P was changed to 0.5% by mass and the polyester resin A of the base layer (B) was changed to 99.87% by mass and the polyester resin P was changed to 0.13% by mass as raw materials, and a biaxially oriented polyester film having a thickness of 12 μm was obtained. Table 3 presents the raw material composition and film forming conditions of the obtained film and the physical properties and evaluation results of the obtained film. The evaluation of film was performed on the layer A surface on the side in contact with the chill roll.

[Example 11]

A biaxially stretched film was formed in the same manner as in Example 1 except that the polyester resin A of the surface layer (A) was changed to 90.0% by mass and the polyester resin K was changed to 10.0% by mass and the polyester resin A of the base layer (B) was changed to 97.4% by mass and the polyester resin K was changed to 2.6% by mass as raw materials, and a biaxially oriented polyester film having a thickness of 12 μm was obtained. Table 3 presents the raw material composition and film forming conditions of the obtained film and the physical properties and evaluation results of the obtained film. The evaluation of film was performed on the layer A surface on the side in contact with the chill roll.

[Reference Example 2]

A biaxially stretched film was formed in the same manner as in implementation 6 except that the polyester resins of the surface layer (A) and the base layer (B) were changed to the polyester resin L as raw materials, and a biaxially oriented polyester film having a thickness of 12 μm was obtained. Table 3 presents the raw material composition and film forming conditions of the obtained film and the physical properties and evaluation results of the obtained film. The evaluation of film was performed on the layer A surface on the side in contact with the chill roll.

As the results of Table 3, the films of Examples 5 to 9 had the number of fine protrusions each having a height of 3 nm or more, the number of fine protrusions each having a height of less than 3 nm, and the arithmetic mean height Sa within the specified ranges, and thus had few quality defects due to charging such as static marks and static mark discharge marks, had excellent performance after secondary processing such as coating and vapor deposition, were environmentally friendly polyester films that were obtained using polyester resins recycled from the market and society, including PET bottles and had a further increased usage ratio of recycled PET bottle raw materials, contained few foreign substances, and had little variations in physical properties in the longitudinal direction when being wound into a long film roll having a long winding length as well.

The obtained film of Comparative Example 4 had the number of fine protrusions each having a height of 3 nm or more within the range, but had a small number of fine protrusions each having a height of less than 3 nm, thus had a high friction-charged electrostatic potential, and was poor in the static mark evaluation. Moreover, the film had a too large arithmetic mean height Sa, thus had a large external haze, and was inferior in transparency.

The obtained film of Comparative Example 5 had the number of fine protrusions each having a height of 3 nm or more within the range, but had a small number of fine protrusions each having a height of less than 3 nm, thus had a high friction-charged electrostatic potential, and was poor in the static mark evaluation.

In Example 11, since the particle content in the polyester resin composition containing particles was small, the usage ratio of recycled PET bottle raw materials was decreased slightly, but the film and the film roll were a film and a film roll having favorable physical properties as in Examples 6 to 10.

In Reference Example 2, since the angle of repose of the pellets of the polyester resin composition containing particles was large, and the raw material ratio fluctuated greatly in the longitudinal direction because of the segregation of raw materials, the number of fine protrusions each having a height of 3 nm or more and the number of fine protrusions each having a height of less than 3 nm of the obtained film varied greatly in the longitudinal direction, it was possible to obtain a favorable film having physical properties equivalent to those in Examples 6 to 10 partially in the film roll, but the film roll was inferior as a film roll.

[Table 3A]

| | Example 6 | | | Example 7 | | | Example 8 | | | Example 9 | | | Example 10 | | |
|---|---|---|---|---|---|---|---|---|---|---|---|---|---|---|---|
| | Layer A | Layer B | Layer A | Layer A | Layer B | Layer A | Layer A | Layer B | Layer A | Layer A | Layer B | Layer A | Layer A | Layer B | Layer A |
| **Resin chip mixing ratio (% by mass)** | | | | | | | | | | | | | | | |
| Polyester resin A | 98 | 99.6 | 98 | 99.33 | 99.87 | 99.33 | 99.5 | 99.87 | 99.5 | 99.6 | 99.87 | 99.6 | 99.2 | 99.87 | 99.2 |
| Polyester resin B | – | – | – | – | – | – | – | – | – | – | – | – | – | – | – |
| Polyester resin C | – | – | – | – | – | – | – | – | – | – | – | – | – | – | – |
| Polyester resin I | 2.0 | 0.40 | 2.0 | – | – | – | – | – | – | – | – | – | – | – | – |
| Polyester resin J | – | – | – | 0.67 | 0.13 | 0.67 | 0.5 | 0.13 | 0.5 | – | – | – | – | – | – |
| Polyester resin K | – | – | – | – | – | – | – | – | – | – | – | – | – | – | – |
| Polyester resin L | – | – | – | – | – | – | – | – | – | – | – | – | – | – | – |
| Polyester resin M | – | – | – | – | – | – | – | – | – | 0.4 | 0.13 | 0.4 | – | – | – |
| Polyester resin N | – | – | – | – | – | – | – | – | – | – | – | – | 0.8 | 0.13 | 0.8 |
| Polyester resin O | – | – | – | – | – | – | – | – | – | – | – | – | – | – | – |
| Polyester resin P | – | – | – | – | – | – | – | – | – | – | – | – | – | – | – |
| Shape of silica | Amorphous | | | Amorphous | | | Amorphous | | | Spherical | | | Amorphous | | |
| Weight average particle size of silica (μm) | 1.3 | | | 1.3 | | | 1.3 | | | 1.0 | | | 1.7 | | |
| Amount of silica added (ppm by weight) | 2000 | 400 | 2000 | 2000 | 390 | 2000 | 1500 | 390 | 1500 | 1200 | 390 | 1200 | 2400 | 390 | 2400 |
| **Film forming step** | | | | | | | | | | | | | | | |
| Inner pipe | Presence | | | Presence | | | Presence | | | Presence | | | Presence | | |
| Angle of repose (degrees) *Polyester resin pellets containing particles | 35 | | | 34 | | | 34 | | | 35 | | | 35 | | |
| Isophthalic acid content rate (mol%) | 1.99 | | | 2.00 | | | 2.00 | | | 2.00 | | | 2.00 | | |
| Thickness of T-die layer (μm) | A/B/A = 1/10/1 | | | A/B/A = 1/10/1 | | | A/B/A = 1/10/1 | | | A/B/A = 1/10/1 | | | A/B/A = 1/10/1 | | |
| Application of static electricity | Wire-shaped electrode Diameter 0.15 mm | | | Wire-shaped electrode Diameter 0.15 mm | | | Wire-shaped electrode Diameter 0.15 mm | | | Wire-shaped electrode Diameter 0.15 mm | | | Wire-shaped electrode Diameter 0.15 mm | | |
| Chill roll cooling temperature (°C) | 30 | | | 30 | | | 30 | | | 30 | | | 30 | | |
| Stretching temperature in longitudinal direction (°C) | 115 | | | 115 | | | 115 | | | 115 | | | 115 | | |
| First stage draw ratio in longitudinal direction (times) | 1.24 | | | 1.24 | | | 1.24 | | | 1.24 | | | 1.24 | | |
| Second stage draw ratio in longitudinal direction (times) | 1.4 | | | 1.4 | | | 1.4 | | | 1.4 | | | 1.4 | | |
| Third stage draw ratio in longitudinal direction (times) | 2.6 | | | 2.6 | | | 2.6 | | | 2.6 | | | 2.6 | | |
| Draw ratio in longitudinal direction (times) | 4.5 | | | 4.5 | | | 4.5 | | | 4.5 | | | 4.5 | | |
| Stretching temperature in width direction (°C) | 140 | | | 140 | | | 140 | | | 140 | | | 140 | | |
| Draw ratio in width direction (times) | 4.3 | | | 4.3 | | | 4 | | | 4.3 | | | 4.3 | | |
| Heat setting temperature (°C) | 245 | | | 245 | | | 245 | | | 245 | | | 245 | | |
| Relaxation rate in width direction (%) | 5 | | | 5 | | | 5 | | | 5 | | | 5 | | |
| Film thickness (μm) | 12 | | | 12 | | | 12 | | | 12 | | | 12 | | |
| **Film properties** | | | | | | | | | | | | | | | |
| Number of defects (pieces/1000 m²) | O | | | O | | | O | | | O | | | O | | |
| Isophthalic acid content rate (mol%) | 1.99 | | | 2.00 | | | 2.00 | | | 2.00 | | | 2.00 | | |
| Recycled PET resin ratio (%) *In the film | 99.3 | | | 99.8 | | | 99.8 | | | 99.8 | | | 99.8 | | |
| Number of fine protrusions each having height of less than 3 nm per 4×10⁻¹² m² (pieces) — Average value (Xave) | 347 | | | 347 | | | 267 | | | 476 | | | 572 | | |
| — Maximum value (Xmax) | 357 | | | 357 | | | 280 | | | 495 | | | 601 | | |
| — Minimum value (Xmin) | 344 | | | 344 | | | 259 | | | 466 | | | 549 | | |
| — Variation in longitudinal direction | 4 | | | 4 | | | 8 | | | 6 | | | 9 | | |
| Number of fine protrusions each having height of 3 nm or more per 4×10⁻¹² m² (pieces) — Average value (Xave) | 544 | | | 544 | | | 372 | | | 331 | | | 352 | | |
| — Maximum value (Xmax) | 560 | | | 560 | | | 391 | | | 344 | | | 370 | | |
| — Minimum value (Xmin) | 539 | | | 539 | | | 361 | | | 324 | | | 338 | | |
| — Variation in longitudinal direction | 4 | | | 4 | | | 8 | | | 6 | | | 9 | | |
| Arithmetic mean height Sa (μm) — Average value (Xave) | 0.020 | | | 0.020 | | | 0.019 | | | 0.015 | | | 0.021 | | |
| — Maximum value (Xmax) | 0.021 | | | 0.021 | | | 0.020 | | | 0.016 | | | 0.022 | | |
| — Minimum value (Xmin) | 0.020 | | | 0.020 | | | 0.018 | | | 0.015 | | | 0.020 | | |
| — Variation in longitudinal direction | 4 | | | 4 | | | 8 | | | 6 | | | 9 | | |
| Static friction coefficient | 0.39 | | | 0.39 | | | 0.40 | | | 0.40 | | | 0.37 | | |
| Dynamic friction coefficient | 0.37 | | | 0.37 | | | 0.39 | | | 0.37 | | | 0.36 | | |
| Maximum height Sz (μm) | 1.6 | | | 1.6 | | | 1.6 | | | 1.4 | | | 1.8 | | |
| External haze (%) | 1.3 | | | 1.2 | | | 1.2 | | | 0.5 | | | 1.3 | | |
| Internal haze (%) | 1.5 | | | 1.6 | | | 1.5 | | | 1.5 | | | 1.7 | | |
| Friction-charged electrostatic potential (V) | 112 | | | 112 | | | 294 | | | 153 | | | 109 | | |
| Evaluation of static mark | ◉ | | | ◉ | | | O | | | ◉ | | | ◉ | | |
| Wetting tension (mN/m) | 53 | | | 53 | | | 52 | | | 53 | | | 53 | | |
| Laminate strength (N/15 mm) | 6.9 | | | 6.8 | | | 6.9 | | | 6.9 | | | 6.8 | | |

28

[Table 3B]

| | | | Comparative Example 4 | | | Comparative Example 5 | | | Example 11 | | | Reference Example 2 | | |
|---|---|---|---|---|---|---|---|---|---|---|---|---|---|---|
| | | | Layer A | Layer B | Layer A | Layer A | Layer B | Layer A | Layer A | Layer B | Layer A | Layer A | Layer B | Layer A |
| Resin chip mixing ratio (% by mass) | | Polyester resin A | 99.5 | 99.87 | 99.5 | 99.5 | 99.87 | 99.5 | 90 | 97.4 | 90 | 98 | 99.6 | 98 |
| | | Polyester resin B | – | – | – | – | – | – | – | – | – | – | – | – |
| | | Polyester resin C | – | – | – | – | – | – | – | – | – | – | – | – |
| | | Polyester resin I | – | – | – | – | – | – | – | – | – | – | – | – |
| | | Polyester resin J | – | – | – | – | – | – | – | – | – | – | – | – |
| | | Polyester resin K | – | – | – | – | – | – | 10 | 2.6 | 10 | – | – | – |
| | | Polyester resin L | – | – | – | – | – | – | – | – | – | 2 | 0.4 | 2 |
| | | Polyester resin M | – | – | – | – | – | – | – | – | – | – | – | – |
| | | Polyester resin N | – | – | – | – | – | – | – | – | – | – | – | – |
| | | Polyester resin O | 0.5 | 0.13 | 0.5 | – | – | – | – | – | – | – | – | – |
| | | Polyester resin P | – | – | – | 0.5 | 0.13 | 0.5 | – | – | – | – | – | – |
| Film forming step | | Shape of silica | Amorphous | | | Spherical | | | Amorphous | | | Amorphous | | |
| | | Weight average particle size of silica (μm) | 2.4 | | | 0.5 | | | 1.3 | | | 1.3 | | |
| | | Amount of silica added (ppm by weight) | 1500 | 400 | 1500 | 1500 | 400 | 1500 | 2000 | 400 | 2000 | 2000 | 400 | 2000 |
| | | Inner pipe | Presence | | | Presence | | | Presence | | | Presence | | |
| | | Angle of repose (degrees) * Polyester resin pellets containing particles | 34 | | | 35 | | | 35 | | | 41 | | |
| | | Isophthalic acid content rate (mol%) | 2.00 | | | 2.00 | | | 1.92 | | | 1.99 | | |
| | | Thickness of T-die layer (μm) | A/B/A = 1/10/1 | | | A/B/A = 1/10/1 | | | A/B/A = 1/10/1 | | | A/B/A = 1/10/1 | | |
| | | Application of static electricity | Wire-shaped electrode Diameter 0.15 mm | | | Wire-shaped electrode Diameter 0.15 mm | | | Wire-shaped electrode Diameter 0.15 mm | | | Wire-shaped electrode Diameter 0.15 mm | | |
| | | Chill roll cooling temperature (°C) | 30 | | | 30 | | | 30 | | | 30 | | |
| | | Stretching temperature in longitudinal direction (°C) | 115 | | | 115 | | | 115 | | | 115 | | |
| | | First stage draw ratio in longitudinal direction (times) | 1.24 | | | 1.24 | | | 1.24 | | | 1.24 | | |
| | | Second stage draw ratio in longitudinal direction (times) | 1.4 | | | 1.4 | | | 1.4 | | | 1.4 | | |
| | | Third stage draw ratio in longitudinal direction (times) | 2.6 | | | 2.6 | | | 2.6 | | | 2.6 | | |
| | | Draw ratio in longitudinal direction (times) | 4.5 | | | 4.5 | | | 4.5 | | | 4.5 | | |
| | | Stretching temperature in width direction (°C) | 140 | | | 140 | | | 140 | | | 140 | | |
| | | Draw ratio in width direction (times) | 4.3 | | | 4.3 | | | 4.3 | | | 4.3 | | |
| | | Heat setting temperature (°C) | 245 | | | 245 | | | 245 | | | 245 | | |
| | | Relaxation rate in width direction (%) | 5 | | | 5 | | | 5 | | | 5 | | |
| | | Film thickness (μm) | 12 | | | 12 | | | 12 | | | 12 | | |
| Film properties | | Number of defects (pieces/1000 m²) | ○ | | | ○ | | | ○ | | | ○ | | |
| | | Isophthalic acid content rate (mol%) | 2.00 | | | 2.00 | | | 1.92 | | | 1.99 | | |
| | | Recycled PET resin ratio (%) * In the film | 99.8 | | | 99.8 | | | 96.2 | | | 99.3 | | |
| | Number of fine protrusions having height of less than 3 nm per 4 × 10⁻¹² m² (pieces) | Average value (Xave) | 71 | | | 216 | | | 329 | | | 329 | | |
| | | Maximum value (Xmax) | 75 | | | 229 | | | 355 | | | 375 | | |
| | | Minimum value (Xmin) | 67 | | | 205 | | | 319 | | | 230 | | |
| | | Variation in longitudinal direction | 10 | | | 11 | | | 11 | | | 44 | | |
| | Number of fine protrusions having height of 3 nm or more per 4 × 10⁻¹² m² (pieces) | Average value (Xave) | 313 | | | 321 | | | 551 | | | 551 | | |
| | | Maximum value (Xmax) | 329 | | | 340 | | | 584 | | | 634 | | |
| | | Minimum value (Xmin) | 300 | | | 305 | | | 529 | | | 386 | | |
| | | Variation in longitudinal direction | 9 | | | 11 | | | 10 | | | 45 | | |
| | Arithmetic mean height Sa (μm) | Average value (Xave) | 0.030 | | | 0.008 | | | 0.022 | | | 0.022 | | |
| | | Maximum value (Xmax) | 0.032 | | | 0.008 | | | 0.023 | | | 0.027 | | |
| | | Minimum value (Xmin) | 0.029 | | | 0.008 | | | 0.021 | | | 0.016 | | |
| | | Variation in longitudinal direction | 10 | | | 11 | | | 10 | | | 49 | | |
| | | Static friction coefficient | 0.42 | | | 0.45 | | | 0.39 | | | 0.39 | | |
| | | Dynamic friction coefficient | 0.40 | | | 0.40 | | | 0.38 | | | 0.38 | | |
| | | Maximum height Sz (μm) | 2.4 | | | 0.2 | | | 1.6 | | | 1.6 | | |
| | | External haze (%) | 2.1 | | | 1.1 | | | 1.4 | | | 1.4 | | |
| | | Internal haze (%) | 1.1 | | | 1.1 | | | 1.6 | | | 1.6 | | |
| | | Friction-charged electrostatic potential (V) | 1454 | | | 1360 | | | 142 | | | 120/1370 | | |
| | | Evaluation of static mark | × | | | × | | | ⊚ | | | ⊚/× | | |
| | | Wetting tension (mN/m) | 54 | | | 51 | | | 52 | | | 52 | | |
| | | Laminate strength (N/15 mm) | 7.0 | | | 6.9 | | | 6.7 | | | 6.8 | | |

INDUSTRIAL APPLICABILITY

The biaxially oriented polyester film of the present invention exhibits excellent transparency, and the film roll is less likely to wrinkle when the film is wound into a film roll at the time of film production or after fslit, the film is easily unwound from the film roll, and thus it is easy to perform secondary processing such as coating and vapor deposition.

In addition, it is possible to provide a biaxially oriented polyester film, which has few quality defects due to charging such as static marks and static mark discharge marks, has excellent performance after secondary processing such as coating and vapor deposition, is an environmentally friendly polyester film obtained using polyester resin recycled from the market and society, including PET bottles, contains few foreign substances, and has little variations in physical properties in the longitudinal direction when being wound into a long film roll having a long winding length as well, and a production method therefor.

Consequently, the biaxially oriented polyester film is useful in food packaging applications, particularly applications for films exhibiting gas barrier properties, and is expected to greatly contribute to the industrial world.

## Claims

1. A biaxially oriented polyester film comprising a polyester resin composition containing a polyester resin recycled from PET bottles and particles, wherein at least one surface meets all of requirements (1) to (3) below:

   (1) a number of fine protrusions each having a height of less than 3 nm per area of $4 \times 10^{-12}$ m$^2$ is 250 or more and 600 or less;
   (2) a number of fine protrusions each having a height of 3 nm or more per area of $4 \times 10^{-12}$ m$^2$ is 300 or more and 600 or less; and
   (3) an arithmetic mean height Sa is 0.010 $\mu$m or more and 0.025 $\mu$m or less.

2. The biaxially oriented polyester film according to claim 1, wherein a content rate of an isophthalic acid component with respect to 100 mol% of total dicarboxylic acid components in the polyester resin composition constituting the biaxially oriented polyester film is 0.02 mol% or more and 2.0 mol% or less.

3. The biaxially oriented polyester film according to claim 1 or 2, wherein a content rate of the polyester resin recycled from PET bottles in the polyester resin composition constituting the biaxially oriented polyester film is 50% by mass or more and 100% by mass or less.

4. The biaxially oriented polyester film according to any one of claims 1 to 3, wherein a number of defects of 1 mm or more per 1 m$^2$ of film is less than 1.0.

5. The biaxially oriented polyester film according to any one of claims 1 to 4, wherein the polyester resin recycled from PET bottles is prepared by performing at least one time of alkaline cleaning.

6. The biaxially oriented polyester film according to any one of claims 1 to 5, wherein a dynamic friction coefficient between the surface meeting all of the requirements (1) to (3) of the biaxially oriented polyester film and a surface facing the surface is 0.2 or more and 0.60 or less.

7. The biaxially oriented polyester film according to any one of claims 1 to 6, wherein a wetting tension of the surface meeting all of the requirements (1) to (3) of the biaxially oriented polyester film is 50 mN/m or more.

8. The biaxially oriented polyester film according to any one of claims 1 to 7, wherein an external haze of the biaxially oriented polyester film is 1.8% or less and an internal haze is 2% or less.

9. A biaxially oriented polyester film roll, which is a film roll obtained by winding the biaxially oriented polyester film according to any one of claims 1 to 8 into a roll, wherein a variation in a number of fine protrusions each having a height of less than 3 nm per area of $4 \times 10^{-12}$ m$^2$ and a variation in a number of fine protrusions each having a height of 3 nm or more per area of $4 \times 10^{-12}$ m$^2$ when sampling is performed every 1,000 m from a surface layer of the film roll to a winding core in a longitudinal direction of the film are both 40% or less:
   (variation is expressed by Equation [1] below where Xmax denotes a maximum value of the number of fine protrusions, Xmin denotes a minimum value, and Xave denotes an average value,

$$\text{variation (\%)} = 100 \times (\text{Xmax} - \text{Xmin})/\text{Xave} \cdots [1]).$$

10. The biaxially oriented polyester film roll according to claim 9, wherein a variation in an arithmetic mean height Sa when sampling is performed every 1,000 m from the surface layer of the film roll to the winding core in the longitudinal direction of the film is 40% or less:
    (variation is expressed by the following Equation [2] where Xmax denotes a maximum value of an arithmetic mean height Sa, Xmin denotes a minimum value, and Xave denotes an average value,

$$\text{variation (\%)} = 100 \times (Xmax - Xmin)/Xave \cdots [2]).$$

11. A production method for the biaxially oriented polyester film according to any one of claims 1 to 8, the production method comprising the step of performing melt extrusion of a polyester raw material resin and a biaxial stretching step, wherein

the step of performing melt extrusion of a polyester raw material resin includes the steps of: supplying a raw material resin chip of the polyester resin recycled from PET bottles to a hopper from above as well as supplying a raw material resin chip of the polyester resin composition containing particles and having an angle of repose of 30 degrees or more and 40 degrees or less through a pipe having an outlet in the hopper and directly above an extruder; mixing both chips; and performing melt extrusion.

12. A production method for the biaxially oriented polyester film roll according to claim 9 or 10, the production method comprising the step of performing melt extrusion of a polyester raw material resin, a biaxial stretching step, and the step of winding a film after biaxial stretching into a roll, wherein

the step of performing melt extrusion of a polyester raw material resin includes the steps of: supplying a raw material resin chip of the polyester resin recycled from PET bottles to a hopper from above as well as supplying a raw material resin chip of the polyester resin composition containing particles and having an angle of repose of 30 degrees or more and 40 degrees or less through a pipe having an outlet in the hopper and directly above an extruder; mixing both chips; and performing melt extrusion.

## Patentansprüche

1. Eine biaxial orientierte Polyesterfolie, umfassend eine Polyesterharzzusammensetzung, die aus PET-Flaschen recyceltes Polyesterharz und Teilchen enthält, wobei mindestens eine Oberfläche alle nachstehenden Anforderungen (1) bis (3) erfüllt:

(1) eine Anzahl feiner Vorsprünge mit einer Höhe von jeweils weniger als 3 nm pro Fläche von $4 \times 10^{-12}$ m$^2$ 250 oder mehr und 600 oder weniger beträgt;
(2) eine Anzahl feiner Vorsprünge mit einer Höhe von jeweils 3 nm oder mehr pro Fläche von $4 \times 10^{-12}$ m$^2$ 300 oder mehr und 600 oder weniger beträgt; und
(3) eine arithmetische mittlere Höhe Sa 0,010 $\mu$m oder mehr und 0,025 $\mu$m oder weniger beträgt.

2. Die biaxial orientierte Polyesterfolie nach Anspruch 1, wobei eine Gehaltsrate einer Isophthalsäurekomponente, bezogen auf 100 Mol-% der gesamten Dicarbonsäurekomponenten in der Polyesterharzzusammensetzung, die die biaxial orientierte Polyesterfolie bildet, 0,02 Mol-% oder mehr und 2,0 Mol-% oder weniger beträgt.

3. Die biaxial orientierte Polyesterfolie nach Anspruch 1 oder 2, wobei eine Gehaltsrate des Polyesterharzes, das aus PET-Flaschen recycelt wurde, in der Polyesterharzzusammensetzung, die die biaxial orientierte Polyesterfolie bildet, 50 Massen-% oder mehr und 100 Massen-% oder weniger beträgt.

4. Die biaxial orientierte Polyesterfolie nach einem der Ansprüche 1 bis 3, wobei eine Anzahl an Defekten von 1 mm oder mehr pro 1 m$^2$ Folie weniger als 1,0 beträgt.

5. Die biaxial orientierte Polyesterfolie nach einem der Ansprüche 1 bis 4, wobei das aus PET-Flaschen recycelte Polyesterharz durch mindestens einmaliges Durchführen einer alkalischen Reinigung hergestellt wird.

6. Die biaxial orientierte Polyesterfolie nach einem der Ansprüche 1 bis 5, wobei ein dynamischer Reibungskoeffizient zwischen der Oberfläche, die alle Anforderungen (1) bis (3) der biaxial orientierten Polyesterfolie erfüllt, und einer der Oberfläche zugewandten Oberfläche 0,2 oder mehr und 0,60 oder weniger beträgt.

7. Die biaxial orientierte Polyesterfolie nach einem der Ansprüche 1 bis 6, wobei eine Benetzungsspannung der Oberfläche, die alle Anforderungen (1) bis (3) der biaxial orientierten Polyesterfolie erfüllt, 50 mN/m oder mehr beträgt.

8. Die biaxial orientierte Polyesterfolie nach einem der Ansprüche 1 bis 7, wobei eine äußere Trübung der biaxial orientierten Polyesterfolie 1,8% oder weniger beträgt und eine innere Trübung 2% oder weniger beträgt.

9. Eine biaxial orientierte Polyesterfolienrolle, bei der es sich um eine Folienrolle handelt, die durch Aufwickeln der biaxial orientierten Polyesterfolie nach einem der Ansprüche 1 bis 8 zu einer Rolle erhalten wird, wobei eine Abweichung einer Anzahl feiner Vorsprünge mit einer Höhe von jeweils weniger als 3 nm pro Fläche von $4 \times 10^{-12}$ m$^2$ und eine Abweichung in einer Anzahl feiner Vorsprünge mit einer Höhe von jeweils 3 nm oder mehr pro Fläche von $4 \times 10^{-12}$ m$^2$, wenn eine Probenahme alle 1.000 m von einer Oberflächenschicht der Folienrolle zu einem Wickelkern in einer Längsrichtung der Folie durchgeführt wird, beide 40% oder weniger betragen:
(die Abweichung ist durch nachstehende Gleichung [1] ausgedrückt, wobei Xmax einen Maximalwert der Anzahl feiner Vorsprünge bezeichnet, Xmin einen Minimalwert bezeichnet und Xave einen Mittelwert bezeichnet,

$$\text{Abweichung (\%)} = 100 \times (\text{Xmax} - \text{Xmin})/\text{Xave} \cdots [1]).$$

10. Die biaxial orientierte Polyesterfolienrolle nach Anspruch 9, wobei eine Abweichung in einer arithmetischen mittleren Höhe Sa, wenn eine Probenahme alle 1.000 m von der Oberflächenschicht der Folienrolle zu dem Wickelkern in Längsrichtung der Folie durchgeführt wird, 40% oder weniger beträgt:
(die Abweichung ist durch die nachstehende Gleichung [2] ausgedrückt, wobei Xmax einen Maximalwert einer arithmetischen mittleren Höhe Sa bezeichnet, Xmin einen Minimalwert bezeichnet und Xave einen Mittelwert bezeichnet,

$$\text{Abweichung (\%)} = 100 \times (\text{Xmax} - \text{Xmin})/\text{Xave} \cdots [2]).$$

11. Ein Herstellungsverfahren für die biaxial orientierte Polyesterfolie nach einem der Ansprüche 1 bis 8, wobei das Herstellungsverfahren den Schritt des Durchführens von Schmelzextrusion eines Polyester-Ausgangsmaterialharzes und einen biaxialen Streckschritt umfasst, wobei
der Schritt des Durchführens von Schmelzextrusion eines Polyester-Ausgangsmaterialharzes die Schritte beinhaltet:
Zuführen eines Ausgangsmaterialharz-Chips des aus PET-Flaschen recycelten Polyesterharzes von oben in einen Trichter sowie Zuführen eines Ausgangsmaterialharz-Chips der Polyesterharzzusammensetzung, die Teilchen enthält und einen Schüttwinkel von 30 Grad oder mehr und 40 Grad oder weniger aufweist, durch ein Rohr mit einem Auslass in dem Trichter und direkt über einem Extruder; Mischen beider Chips; und Durchführen von Schmelzextrusion.

12. Ein Herstellungsverfahren für die biaxial orientierte Polyesterfolienrolle nach Anspruch 9 oder 10, wobei das Herstellungsverfahren den Schritt des Durchführens von Schmelzextrusion eines Polyester-Ausgangsmaterialharzes, einen biaxialen Streckschritt und den Schritt des Aufwickelns einer Folie nach dem biaxialen Strecken zu einer Rolle umfasst, wobei
der Schritt des Durchführens von Schmelzextrusion eines Polyester-Ausgangsmaterialharzes die Schritte beinhaltet:
Zuführen eines Ausgangsmaterialharz-Chips des aus PET-Flaschen recycelten Polyesterharzes von oben in einen Trichter sowie Zuführen eines Ausgangsmaterialharz-Chips der Polyesterharzzusammensetzung, die Teilchen enthält und einen Schüttwinkel von 30 Grad oder mehr und 40 Grad oder weniger aufweist, durch ein Rohr mit einem Auslass in dem Trichter und direkt über einem Extruder; Mischen beider Chips; und Durchführen von Schmelzextrusion.

## Revendications

1. Film de polyester à orientation biaxiale comprenant une composition de résine de polyester contenant une résine de polyester recyclée à partir de particules et de bouteilles en PET, dans lequel au moins une surface satisfait à la totalité des exigences (1) à (3) ci-dessous :

   (1) le nombre de fines protubérances ayant chacune une hauteur inférieure à 3 nm par superficie de $4 \times 10^{-12}$ m$^2$ est de 250 ou plus et 600 ou moins ;
   (2) le nombre de fines protubérances ayant chacune une hauteur de 3 nm ou plus par superficie de $4 \times 10^{-12}$ m$^2$ est de 300 ou plus et 600 ou moins ; et
   (3) la hauteur moyenne arithmétique Sa est de 0,010 $\mu$m ou plus et 0,025 $\mu$m ou moins.

2. Film de polyester à orientation biaxiale selon la revendication 1, dans lequel le taux en contenu d'un composant acide isophtalique pour 100 % en moles des composants acides dicarboxyliques totaux dans la composition de résine de polyester constituant le film de polyester à orientation biaxiale est de 0,02 % en moles ou plus et 2,0 % en moles ou moins.

3. Film de polyester à orientation biaxiale selon la revendication 1 ou 2, dans lequel le taux en contenu de la résine de polyester recyclée à partir de bouteilles en PET dans la composition de résine de polyester constituant le film de polyester à orientation biaxiale est de 50 % en masse ou plus et 100 % en masse ou moins.

4. Film de polyester à orientation biaxiale selon l'une quelconque des revendications 1 à 3, dans lequel le nombre de défauts de 1 mm ou plus par $m^2$ de film est inférieur à 1,0.

5. Film de polyester à orientation biaxiale selon l'une quelconque des revendications 1 à 4, dans lequel la résine de polyester recyclée à partir de bouteilles en PET est préparée par mise en œuvre au moins une fois d'un nettoyage alcalin.

6. Film de polyester à orientation biaxiale selon l'une quelconque des revendications 1 à 5, dans lequel le coefficient de frottement dynamique entre la surface satisfaisant à toutes les exigences (1) à (3) du film de polyester à orientation biaxiale et une surface faisant face à la surface est de 0,2 ou plus et 0,60 ou moins.

7. Film de polyester à orientation biaxiale selon l'une quelconque des revendications 1 à 6, dans lequel la tension de mouillage de la surface satisfaisant à toutes les exigences (1) à (3) du film de polyester à orientation biaxiale est de 50 mN/m ou plus.

8. Film de polyester à orientation biaxiale selon l'une quelconque des revendications 1 à 7, dans lequel le voile externe du film de polyester à orientation biaxiale est de 1,8 % ou moins et le voile interne est de 2 % ou moins.

9. Rouleau de film de polyester à orientation biaxiale, qui est un rouleau de film obtenu par enroulement du film de polyester à orientation biaxiale selon l'une quelconque des revendications 1 à 8 en un rouleau, dans lequel la variation du nombre de fines protubérances ayant chacune une hauteur inférieure à 3 nm par superficie de 4 x $10^{-12}$ $m^2$ et la variation du nombre de fines protubérances ayant chacune une hauteur de 3 nm ou plus par superficie de 4 x $10^{-12}$ $m^2$ lorsqu'un échantillonnage est effectué tous les 1 000 m à partir d'une couche de surface du rouleau de film jusqu'à l'âme d'enroulement dans la direction longitudinale du film sont toutes deux de 40 % ou moins :
(la variation est exprimée par l'équation [1] ci-dessous où Xmax désigne la valeur maximale du nombre de fines protubérances, Xmin désigne la valeur minimale, et Xave désigne la valeur moyenne,

$$\text{variation (\%)} = 100 \times (Xmax - Xmin) / Xave \qquad ... [1]).$$

10. Rouleau de film de polyester à orientation biaxiale selon la revendication 9, dans lequel la variation de la hauteur moyenne arithmétique Sa lorsqu'un échantillonnage est effectué tous les 1 000 m à partir d'une couche de surface du rouleau de film jusqu'à l'âme d'enroulement dans la direction longitudinale du film est de 40 % ou moins :
(la variation est exprimée par l'équation [2] ci-dessous où Xmax désigne la valeur maximale de la hauteur moyenne arithmétique Sa, Xmin désigne la valeur minimale, et Xave désigne la valeur moyenne,

$$\text{variation (\%)} = 100 \times (Xmax - Xmin) / Xave \qquad ... [2]).$$

11. Méthode de production du film de polyester à orientation biaxiale selon l'une quelconque des revendications 1 à 8, la méthode de production comprenant l'étape de mise en œuvre d'une extrusion à l'état fondu d'une résine matière première de polyester et une étape d'étirement biaxial, dans laquelle
l'étape de mise en œuvre d'une extrusion à l'état fondu d'une résine matière première de polyester comprend les étapes de : fourniture d'un copeau de résine matière première de la résine de polyester recyclée à partir de bouteilles en PET à une trémie depuis le dessus ainsi que fourniture d'un copeau de résine matière première de la composition de résine de polyester contenant des particules et ayant un angle d'éboulement de 30 degrés ou plus et 40 degrés ou moins par l'intermédiaire d'un tuyau ayant une sortie dans la trémie et directement au-dessus d'une extrudeuse ; mélange des deux copeaux ; et mise en œuvre d'une extrusion à l'état fondu.

12. Méthode de production du rouleau de film de polyester à orientation biaxiale selon la revendication 9 ou 10, la méthode de production comprenant l'étape de mise en œuvre d'une extrusion à l'état fondu d'une résine matière première de polyester, une étape d'étirement biaxial, et une étape d'enroulement d'un film après étirement biaxial en un rouleau, dans laquelle

l'étape de mise en œuvre d'une extrusion à l'état fondu d'une résine matière première de polyester comprend les étapes de : fourniture d'un copeau de résine matière première de la résine de polyester recyclée à partir de bouteilles en PET à une trémie depuis le dessus ainsi que fourniture d'un copeau de résine matière première de la composition de résine de polyester contenant des particules et ayant un angle d'éboulement de 30 degrés ou plus et 40 degrés ou moins par l'intermédiaire d'un tuyau ayant une sortie dans la trémie et directement au-dessus d'une extrudeuse ; mélange des deux copeaux ; et mise en œuvre d'une extrusion à l'état fondu.

## Fig.1

## Fig.2

## Fig.3

MEANDERING DETECTOR

FREE ROLL

BIAXIALLY ORIENTED
POLYESTER FILM

FILM ROLL

TILT ADJUSTING
ROLL

WINDING
CORE

STATIC
ELIMINATING
BRUSH

MEANDERING
DETECTOR

Fig.4

Fig.5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H01144425 A
- JP 10119172 A
- JP 11010725 A
- JP 4834923 B
- JP 2014065282 A